# EUROPÄISCHE PATENTANMELDUNG

(11) **EP 1 479 883 A1**
(43) Veröffentlichungstag der Anmeldung: **24.11.2004**
(21) Anmeldenummer: 03010528.2
(22) Anmeldetag: 10.05.2003
(51) Int. Cl.: F01N 3/022, F01N 3/025, F01N 3/027, F01N 3/035, F01N 3/08, F01N 3/20, F01N 3/28

(54) **Verfahren und Vorrichtung zur Reinigung von Abgasen**

(71) Anmelder: Universität Stuttgart, 70174 Stuttgart (DE)
(72) Erfinder: Friedrich, Gerhard, 75482 Illingen (DE); Kolios, Grigorios, 70197 Stuttgart (DE); Schmeisser, Volker, 70180 Stuttgart (DE); Tuttlies, Ute, 70184 Stuttgart (DE); Opferkuch Frank, 72669 Unterensingen (DE); Eigenberger, Gerhart, 67435 Neustadt (DE)
(74) Vertreter: Schmid, Wolfgang

(57) **Zusammenfassung**

Bei einem Verfahren und Vorrichtung zur Reinigung von Abgasen mit brennbaren, NOₓ-haltigen und/oder partikel- oder rußförmigen Abgasbestandteilen, insbesondere aus Brennkraftmaschinen, wird das Abgas in einen Abgaswärmetauscher (12) eingeleitet, in einem Umlenkbereich (9) umgelenkt und strömt in Gegenrichtung zu dem einströmenden Abgas aus dem Abgaswärmetauscher (12) aus. Das einströmende Abgas wird durch das ausströmende Abgas erwärmt, das Abgas wird an innerhalb des Abgaswärmetauschers angeordneten Reinigungskomponenten gereinigt, dem Abgas wird in dem Umlenkbereich (9) Wärme und ggf. eine reduzierende Komponente zugeführt, und die Temperatur sowie die oxidierende oder reduzierende Atmosphäre in dem Umlenkbereich (9) wird in Abhängigkeit der Betriebsbedingungen der Brennkraftmaschine derart geregelt, dass eine optimale Schadstoffumwandlung und Regeneration der Reinigungskomponenten gewährleistet wird.

## Beschreibung

Die Erfindung betrifft ein Verfahren und eine Vorrichtung zur Reinigung von Abgasen mit brennbaren, NOₓhaltigen und/oder partikel- oder rußförmigen Abgasbestandteilen. Des Weiteren betrifft die Erfindung eine Wärmezufuhrvorrichtung zur Anwendung in einem derartigen Verfahren und für eine derartige Vorrichtung sowie ein Verfahren und eine Vorrichtung zur Abscheidung und Umwandlung von brennbaren Partikeln aus Abgasströmen. Schließlich betrifft die Erfindung noch ein Verfahren zur kombinierten Abgasreinigung bei einem Kraftfahrzeug, zur Abgasschalldämpfung und/oder zur Bereitstellung von Wärme für die Fahrzeuginnenraumheizung.

### Problemstellung

Abgasströme enthalten häufig brennbare Schadstoffe in Gas- und/oder Partikelform und/oder NOₓ, also Stickoxide. Sie fallen häufig bei einer relativ geringen Temperatur an, sodass eine Aufheizung auf die für eine thermische oder katalytische Schadstoffumwandlung notwendige Temperatur erforderlich ist. Eine solche Aufheizung erfordert immer dann hohe Energiemengen, wenn die Abgasströme groß und die Schadstoffkonzentrationen so gering sind, dass ihre Verbrennung keinen wesentlichen Energiebeitrag liefern kann. Das gilt insbesondere für das Abgas von Brennkraftmaschinen.

Hier fallen die Abgase beim Kaltstart oder bei nur geringer Motorlast mit einer Temperatur an, die für die bekannten Verfahren der katalytischen Abgasreinigung zu niedrig ist. Dies gilt insbesondere für Dieselmotoren oder im Magerbetrieb betriebene Ottomotoren.

Nach dem allgemeinen Stand der Technik werden für die Abgasreinigung von gasförmigen, brennbaren Bestandteilen vorzugsweise sogenannte autotherme Abgaskonverter eingesetzt, in denen die Schadstoffe an einem Katalysator oder in einer Brennkammer verbrannt werden und das heiße Abgas zum Aufheizen des kalten Zulaufs genutzt wird.

Im Bereich der Motorabgasreinigung sind allerdings Abgaswärmetauscher zur Aufheizung des Abgases bisher nicht gebräuchlich. Vielmehr setzt man vorwiegend auf eine motornahe Anordnung des Katalysators, sowie auf eine Beeinflussung der Abgaszusammensetzung über die elektronische Motorsteuerung, um ein schnelles Aufheizen des Katalysators zu erreichen. Umgekehrt versucht man, eine zu starke Aufheizung des Katalysators im Hochlastbetrieb durch eine motorferne Anordnung des Katalysators und eine optionale Kühlung der Abgasleitungen zu vermeiden. Für die Lösung dieser sich widersprechender Forderungen sind bisher noch keine allgemein akzeptierten und effizient einsetzbaren Lösungskonzepte bekannt geworden. Gegen den Einsatz von Abgaswärmetauschern werden das zusätzliche Gewicht, der zusätzliche Druckverlust und das Fehlen apparativ überzeugender und fertigungstechnisch einfacher Lösungen ins Feld geführt.

### Stand der Technik: Abgaswärmetauscher

Für den Wärmetausch zwischen dem heißen Abgas und dem kalten Zulauf kommen entweder ein rekuperativer bzw. indirekter oder ein regenerativer bzw. direkter Wärmetausch mit einem festen Wärmespeicher zum Einsatz.

Der regenerative Wärmetausch kann sehr effizient durchgeführt werden. Er eignet sich besonders für mittlere und große Volumenströme und erfordert ein periodisches Umschalten der Abgasströme.

Der rekuperative Betrieb erfolgt dagegen kontinuierlich und eignet sich damit auch gut für kleine und mittlere Abgasströme. In der Praxis werden hierfür beispielsweise Rohrbündelwärmetauscher eingesetzt, deren Herstellung insbesondere dann aufwändig ist, wenn eine hohe Güte des Wärmerücktauschs erreicht werden soll. Besser geeignet sind Parallelkanal-Wärmetauscher nach Art von Plattenwärmetauschern. Diese lassen sich auch mit einer Reaktionseinheit für die katalytische Umwandlung kombinieren.

Im Hinblick auf solche Parallelkanal-Wärmetauscher-Reaktoren wird auf die EP 0 638 140 B1, die DE 197 25 378 A1 und die DE 100 40 209 A1 verwiesen, die Kanalanordnungen beschreiben, bei denen ein für eine Abgasreinigung geeigneter Katalysator entweder auf der Wand oder auf zusätzlichen Strukturen in den Kanälen angebracht werden kann.

Plattenwärmetauscher werden in der Regel mit elastischen Dichtungen zwischen den Einzelplatten ausgeführt. Die notwendige Dichtungspressung wird über Zuganker zwischen den massiven Endplatten erreicht. Solche Konzepte sind für eine katalytische oder thermische Abgasreinigung aufgrund der hohen auftretenden Temperaturen sowie aus Gewichtsgründen ungeeignet.

Durchgehend geschweißte Plattenwärmetauscheranordnungen wurden z. B. für Brennstoffzellensysteme mit integrierter Kraftstoffreformierung bekannt. Sie vermeiden die elastischen Dichtungen und die massiven Endplatten, jedoch sind die vielfachen Schweißnähte kostspielig und fehleranfällig. Außerdem führt die vielfache Strömungsumlenkung in konventionellen Plattenwärmetauscheranordnungen zu einem für eine Abgasreinigung unakzeptablen Druckverlust und gegebenenfalls zu einer unkontrollierten Abscheidung und Verstopfung durch partikelförmige Abgasbestandteile.

Das in der DE 197 25 378 A1 beschriebene Parallelkanalkonzept zeichnet sich durch eine einfache Trennung der Kanäle durch eine ziehharmonikaartige Faltung und eine einfache Strömungsführung aus. Allerdings hat sich bei diesem Konzept die Gestaltung der beiden Bodenplatten und die dort erforderliche Abdichtung zwischen den Kanälen und dem Außengehäuse als konstruktiv und fertigungstechnisch schwierig erwiesen. Außerdem führt die Strömungsumlenkung bei Ein- und Austritt zu einem erhöhten Druckverlust.

Aus diesen sehr vielschichtigen Gründen haben sich die vorgeschlagenen Plattenwärmetauscherkonzepte bisher in der Praxis der katalytischen oder thermischen Abgasreinigung nicht durchgesetzt, da sie keine Ansätze für eine zweckmäßige apparativ-konstruktive Ausgestaltung bieten, wodurch die Herstellung solcher Wärmetauscher zur Konvertierung von Abgas schwierig und sehr kostenaufwändig bleibt. Für die Automobilindustrie kam der Umstand des zusätzlichen Gewichts- und Druckverlustes hinzu, sodass bislang keine Möglichkeit zur Anwendung dieser Konzepte bei der Autoabgasreinigung gesehen wurde.

### Stand der Technik: Wärmequelle

Auch beim Einsatz eines effizienten Abgaswärmetauschers ist zumindest zum Anfahren des kalten Abgaskonverters eine Wärmequelle erforderlich, die den für die Schadstoffumwandlung maßgebenden Bereich des Konverters auf eine für die Umwandlung erforderliche Temperatur aufheizt. Diese Aufheizung erfolgt bei stationären autothermen Abgasreinigungsanlagen bisher entweder elektrisch oder durch einen Hilfsbrenner, dessen heißes Abgas der heißen Seite des Abgaswärmetauschers zugeführt wird.

Aufgrund des Wärmerücktauschs kann die Leistung der Zusatzheizung bei autothermen Abgasreinigungsanlagen auch bei kaltem Zulauf stark reduziert oder abgeschaltet werden, sobald der Reaktionsbereich des Konverters seine Betriebstemperatur erreicht hat.

In der Autoabgasreinigung ist die Aufwärmung des Katalysators über das heiße Motorabgas üblich. Dazu wird zum Beispiel mittels der Motorsteuerung und/oder durch Nacheinspritzen und Zünden von Kraftstoff in den Abgaskanälen vor dem Abgaskonverter ein heißes Abgas erzeugt, das den Katalysator schnell aufheizt. Auch elektrisch beheizbare Vorkatalysatoren sind im Einsatz. An ihnen wird nach Motorkaltstart ein brennstoffreiches Abgas gezündet. Die dabei freigesetzte Wärme heizt in der Folge den Hauptkatalysator auf.

Nachteilig bei diesen Konzepten ist die Tatsache, dass die eingetragene bzw. freigesetzte Wärme nicht wie bei den autothermen Konzepten zum großen Teil im heißen Teil des Konverters verbleibt, sondern ausgetragen wird, sodass ein erhöhter Energieverbrauch resultiert. Das gilt insbesondere für den Schwachlastbetrieb von Diesel- und Otto-Magermotoren, bei denen das Abgas in der Regel eine zu niedrige Temperatur für die Schadstoffumwandlung besitzt.

### Stand der Technik: NOₓ-Umwandlung

Allen für eine NOₓ-Umwandlung in molekularen Stickstoff bekannten Verfahren ist gemeinsam, dass sie erst bei höheren Temperaturen (300 - 400°C) zu brauchbaren Umsätzen führen. Die Abgastemperaturen von Otto-Magermotoren und insbesondere Dieselmotoren liegen in vielen Betriebsbereichen häufig niedriger, sodass über die Motorsteuerung eingegriffen werden muss, wenn der für eine Schadstoffumwandlung erforderliche Temperaturbereich erreicht werden soll. Das führt zu Kraftstoffmehrverbrauch.

Das bei den meisten NOₓ-Umwandlungsverfahren erforderliche Reduktionsmittel wird bei den bisher in Entwicklung befindlichen Konzepten entweder aus einem zusätzlich mitgeführten Hilfsstoff, wie zum Beispiel Harnstoff, freigesetzt oder durch motorische Maßnahmen, wie zum Beispiel Nacheinspritzung, im Motor erzeugt, sodass vorübergehend ein reduzierendes Abgas entsteht. Die Harnstoff-Variante erfordert einen zusätzlichen Aufwand für Betankung, Bevorratung und Umwandlung. Die Erzeugung durch Nacheinspritzung führt zu erhöhtem Kraftstoffverbrauch, da der Sauerstoffüberschuss des gesamten Abgases durch die Nacheinspritzung verbraucht werden muss. Bei dem sogenannten Speicherkat-Konzept wird das Reduktionsmittel CO und H₂ bisher durchwegs dadurch erzeugt, dass die Motorsteuerung den Motorbetrieb kurzzeitig so verstellt, dass ein fettes (reduzierendes) Abgas entsteht. Dies führt ebenfalls zu erhöhtem Kraftstoffverbrauch und kann darüber hinaus die Fahrdynamik unvorteilhaft einschränken.

Andererseits ist es bekannt, dass ein CO- und H₂haltiges Reduktionsmittel sehr effizient durch partielle katalytische Oxidation oder durch (Dampf-) Reformierung von Kraftstoff hergestellt werden kann.

### Stand der Technik:

### Partikel- oder Rußfilterung und Filterregeneration

Das Standardverfahren zur Abtrennung partikelförmiger Bestandteile ist die Filterung. Da sich der Filter dabei zusetzt, muss er in periodischen Abständen oder fortlaufend regeneriert werden. Handelt es sich um brennbare Partikel, so besteht ein nahe liegendes Vorgehen im Abbrennen der Filterbeladung. Das kann entweder in periodischen Abständen erfolgen, indem die Filtertemperatur dazu kurzzeitig über die Zündtemperatur der Partikel angehoben wird. Es kann auch kontinuierlich erfolgen, indem der Filter die ganze Zeit bei einer so hohen Temperatur betrieben wird, dass die abgeschiedenen Partikel schneller abbrennen als sie nachgeliefert werden.

Beide Möglichkeiten werden bei der Dieselpartikelfilterung genutzt. Dazu erfolgt die Abscheidung meist auf porösen keramischen Monolithen, bei denen die Rohgasund Reingaskanäle schachbrettartig im Monolith angeordnet sind. Die Reingaskanäle sind am Filtereintritt, die Rohgaskanäle am Filteraustritt verschlossen, sodass die Filterung durch die porösen Kanalwände erfolgt.

Der kontinuierliche Filterabbrand ist weitgehend problemlos möglich, wenn die Rohgastemperatur hinreichend hoch ist. Die erforderliche Minimaltemperatur liegt bei normalem Dieselabgas in der Größenordnung von 650°C. Da das Abgas besonders im niedrigen Lastbereich wesentlich kälter anfällt, wäre eine erhebliche Zusatzenergie erforderlich, wenn das Abgas ohne Wärmerücktausch auf diese Temperatur angehoben werden müsste.

Daher sehen viele Konzepte vor, das Abgas nur in periodischem Abstand auf Zündtemperatur aufzuheizen, wenn sich eine ausreichende Filterbeladung aufgebaut hat. Diese Konzepte funktionieren immer dann zufrieden stellend, wenn die Regeneration bei einer optimalen Filterbeladung gezündet wird. Ist die Filterbeladung zu niedrig, besteht die Gefahr einer unvollständigen Durchzündung und eines unvollständigen Abbrands mit der Folge, dass die Beladung bei der nächsten Regenerierung zu hoch ist. Ist die Filterbeladung zu hoch, so besteht die Gefahr, dass sich eine Abbrandfront mit einer nicht beherrschbaren Maximaltemperatur entwickelt, bei der der Filter und unter Umständen das gesamte Fahrzeug zerstört wird.

Wie eigene Untersuchungen gezeigt haben, kann eine Abbrandfront mit nicht beherrschbarem Maximaltemperaturanstieg immer dann auftreten, wenn die Einströmung in den Filter in der gleichen Richtung wie die Abströmung stattfindet und die Zündung des Abbrands durch Temperaturerhöhung des eintretenden Gases erfolgt. Aufgrund des inhärenten Abbrandrisikos werden Dieselrußfilter zurzeit nur mit aufwändigen Vorkehrungen in Serienfahrzeugen eingesetzt.

### Stand der Technik:

### Integration von Autoabgaskomponenten

Die verschiedenen Komponenten zur Abgasbehandlung von Motorabgas stellen mittlerweile wertmäßig einen signifikanten Teil der Kosten des Antriebsstrangs dar. Neben Abgaskatalysator, NOₓ-Katalysator und Dieselrußfilter zählen dazu der Abgasschalldämpfer und gegebenenfalls auch Einrichtungen für die Fahrzeuginnenraumheizung (Standheizung).

Wenn der Betrieb des Autoabgaskonverters wie derzeit üblich über die Motorsteuerung beeinflusst wird, hat es sich unter Umständen als notwendig erwiesen, den Katalysator in mehrere Einheiten aufzuspalten und diese motornah und motorfern anzuordnen. Das trägt zu einer weiteren Kostensteigerung und gegebenenfalls Gewichtszunahme bei.

Demgegenüber hätte eine Zusammenfassung mehrerer oder aller vorstehend genannter Einheiten zu einem Abgasmodul und seine Beeinflussung unabhängig von der Motorsteuerung kostenmäßige, funktionelle und gegebenenfalls auch gewichtsmäßige Vorteile.

### Erfindung

Es ist daher Aufgabe der vorliegenden Erfindung, ein Verfahren und eine Vorrichtung zur Reinigung von Abgasen mit brennbaren, NOₓ-haltigen und/oder partikeloder rußförmigen Abgasbestandteilen in Form eines Abgaskonverters zur Umwandlung brennbarer gasförmiger und/oder fester sowie NOₓ-haltiger Bestandteile in einem Abgasstrom zu schaffen, welches bzw. welche für möglichst viele mit verschiedenen Schadstoffen belastete Abgase eingesetzt werden kann.

Erfindungsgemäß wird diese Aufgabe durch die in den Ansprüchen genannten Merkmale gelöst.

Die Vorteile der erfindungsgemäßen Verfahren und der erfindungsgemäßen Vorrichtungen sind in einer konstruktiv und fertigungstechnisch einfachen Realisierung des Abgaswärmetauschs mit niedrigem Druckverlust, hoher Wärmeübertragungsleistung und der Möglichkeit, Abgaskatalysatoren und/oder Filter einfach zu integrieren zu sehen.

Des Weiteren schafft die Erfindung eine Integration von Katalysatoren und/oder Filtern für die Abscheidung und/oder Umwandlung von brennbaren und/oder NOₓhaltigen Abgaskomponenten in den Abgaswärmetauscher in einer für die Umwandlung zweckmäßigen Reihenfolge.

Es wird die Integration und Regelung einer von motorischen Maßnahmen unabhängigen Wärmequelle zur lokalen Einstellung eines für die Umwandlung günstigen Temperaturbereichs, vorzugsweise unter Nutzung der Verbrennungswärme des Kraftstoffs sowie einer Erzeugungseinrichtung von Reduktionsmittel für die NOₓ-Umwandlung, vorzugsweise durch Reformierung und/oder partielle Oxidation von Kraftstoff geschaffen.

Durch die Schaffung neuartiger Filterelemente für die Abscheidung und Umwandlung von partikulären, insbesondere kohlenstoffhaltigen Abgasbestandteilen mit einem im Vergleich zu bisherigen Filtern sichereren Abbrandverhalten und ihre zweckmäßige Integration in den Abgaskonverter ergeben sich neue Anwendungsmöglichkeiten für Partikelfilter.

Des Weiteren bieten sich Möglichkeiten für eine wahlweise Integration von weiteren für die Abgasnachbehandlung notwendigen oder wünschenswerten Funktionen wie Schalldämpfung und/oder Wärmeauskopplung für Heizzwecke (Standheizung) in den Abgaskonverter.

Die Grundform der Erfindung besteht aus einem Gegenstromwärmetauscher aus parallelen Kanälen, in den das Abgas eintritt und in den Einströmkanälen im Gegenstrom zum heißen Gas der Ausströmkanäle aufgeheizt wird. Das so aufgeheizte Gas erfährt nach Austritt aus den Einströmkanälen gegebenenfalls eine weitere Wärmezufuhr, wird umgelenkt, strömt in den Ausströmkanälen zurück und verlässt den Apparat. In den Ein- und Ausströmkanälen sowie im Bereich der Umlenkung können Katalysatoren und/oder Filter so angeordnet sein dass die gewünschte Abscheidung und/oder Umwandlung bei der dafür geeignetsten Temperatur stattfindet. Dazu kann die Wärmezufuhr im Bereich der Umlenkung gezielt verändert werden.

Für die autotherme Durchführung katalytischer Reaktionen mit einem integrierten Gegenstromwärmetausch sind in der chemischen Reaktionstechnik die eingangs benannten katalytischen Wandreaktorkonzepte in Parallelkanalanordnung bekannt geworden. Sie sind prinzipiell zur Realisierung des Gegenstromwärmetauschs im erfindungsgemäßen Abgaskonverter geeignet. Das gilt besonders für das in der US-PS 4,271,110 beschriebene Konzept eines keramischen Monoliths, das durch die im Patent beschriebene Kanalpräparation zu einem Parallelstromapparat mit axialer Einströmung und seitlicher Ausströmung verändert werden kann.

Die anderen bisher bekannt gewordenen Konzepte besitzen allerdings konstruktive oder fertigungstechnische Nachteile, sodass sie sich bisher in der Praxis kaum durchgesetzt haben.

Weitere vorteilhafte Ausgestaltungen und Weiterbildungen der Erfindung ergeben sich aus den Unteransprüchen sowie aus den nachfolgend anhand der Zeichnung prinzipmäßig dargestellten Ausführungsbeispielen.

Es zeigen:
- Fig. 1: eine erste Ausführungsform des erfindungsgemäßen Abgaskonverters;
- Fig. 2: einen Einströmkanal des Abgaskonverters aus Fig. 1;
- Fig. 3: die Ein- und Ausströmkanäle des Abgaskonverters aus Fig. 1;
- Fig. 4: eine erste Möglichkeit zur Bildung des Einströmkanals;
- Fig. 5: eine zweite Möglichkeit zur Bildung des Einströmkanals;
- Fig. 6: eine Möglichkeit zur Bildung mehrerer Einströmkanäle;
- Fig. 7: eine dritte Möglichkeit zur Bildung des Einströmkanals;
- Fig. 8: eine Abwicklung der Seitenwände eines Einströmkanals;
- Fig. 9: eine erste Möglichkeit zur Bildung des Einströmbereichs in den Einströmkanal;
- Fig. 10: eine zweite Möglichkeit zur Bildung des Einströmbereichs in den Einströmkanal;
- Fig. 11: eine dritte Möglichkeit zur Bildung des Einströmbereichs in den Einströmkanal;
- Fig. 12: eine zweite Ausführungsform des erfindungsgemäßen Abgaskonverters gemäß dem Schnitt XII-XII aus Fig. 13;
- Fig. 13: eine Ansicht gemäß dem Pfeil XIII aus Fig. 12;
- Fig. 14: eine dritte Ausführungsform des erfindungsgemäßen Abgaskonverters;
- Fig. 15: eine vierte Ausführungsform des erfindungsgemäßen Abgaskonverters gemäß dem Schnitt XV-XV aus Fig. 16;
- Fig. 16: eine Ansicht gemäß dem Schnitt XVI-XVI aus Fig. 15;
- Fig. 17: eine fünfte Ausführungsform des erfindungsgemäßen Abgaskonverters;
- Fig. 18: eine alternative Ausführungsform zu Fig. 17; und
- Fig. 19: eine weitere alternative Ausführungsform zu Fig. 17.

Die nachfolgende Beschreibung der Erfindung gliedert sich in
- eine Erläuterung des erfindungsgemäßen apparativen Konzepts und zweckmäßiger Varianten des Abgaswärmetauschers,
- eine Beschreibung erfindungsgemäßer Ausführungen der Wärmequellen und ihrer Nutzung zur Bereitstellung von Wärme und von reduzierendem Abgas,
- die Beschreibung der erfindungsgemäßen Ausgestaltung der Stickoxid-Umwandlung nach dem NOₓ-Speicherkat-Konzept und ihre Integration in den Abgaskonverter,
- die Beschreibung verschiedener erfindungsgemäßer Varianten für die Abscheidung und Umwandlung brennbarer, partikulärer Abgasbestandteile wie Dieselruß und ihre Integration in den Abgaskonverter, sowie die Beschreibung eines neuen Gestaltungsprinzips für einen Partikelfilter mit einem gegenüber den bisherigen Filtern sichereren Abbrandverhaltens,
- die Beschreibung der Integration unterschiedlicher Abgasbehandlungsfunktionen in einem erfindungsgemäßen Abgaskonverter.

### Allgemeines apparatives Gestaltungskonzept und Abgaswärmetausch

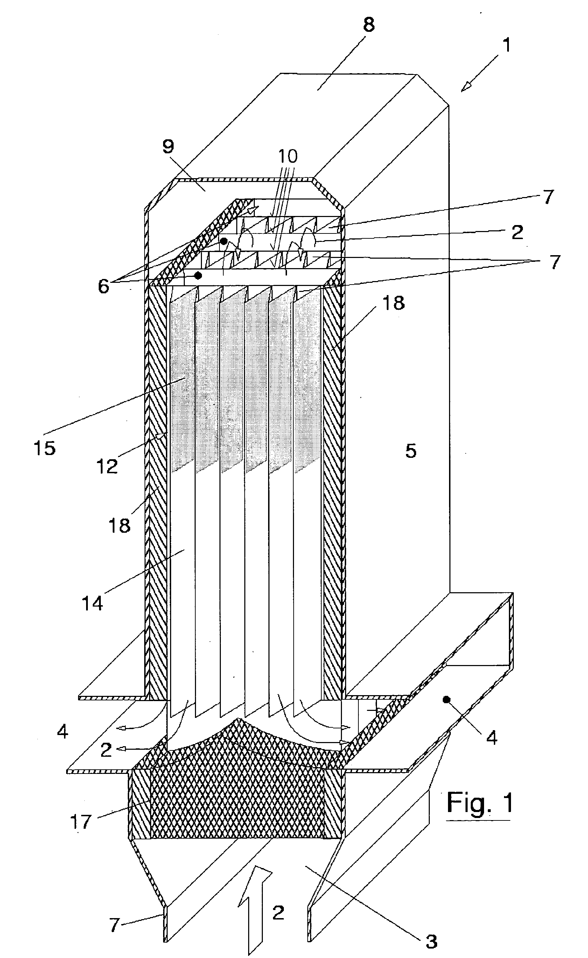

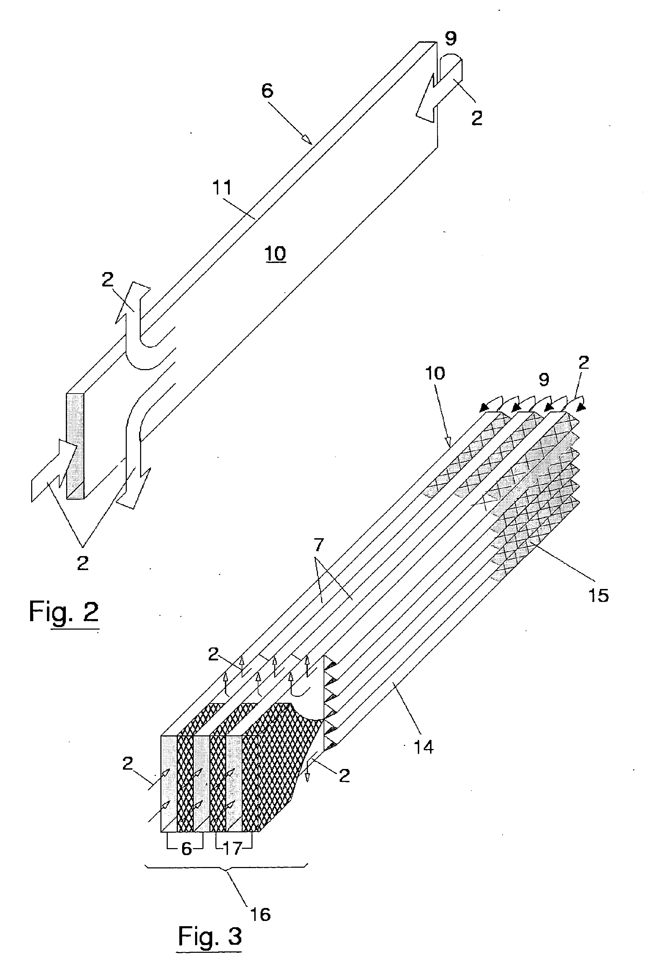

Im folgenden wird ein Konzept angegeben, wie es beispielhaft in Fig. 1 dargestellt ist und in den Fig. 2 bis 11 sowie 12 und 13 näher erläutert wird.

Fig. 1 zeigt eine Vorrichtung zur Reinigung von Abgasen mit brennbaren, NOₓ-haltigen und/oder partikeloder rußförmigen Abgasbestandteilen bzw. einen Abgaskonverter 1, der zur Umwandlung brennbarer, gasförmiger, fester und/oder NOₓ-haltiger Bestandteile in einem mit Pfeilen angedeuteten Abgasstrom 2 vorgesehen ist. Aus Übersichtlichkeitsgründen sind nicht alle Pfeile, die den Verlauf des Abgasstroms 2 kennzeichnen, mit dem Bezugszeichen 2 bezeichnet. Der Abgaskonverter 1 schließt sich vorzugsweise an eine ebenfalls nicht dargestellte Brennkraftmaschine an.

Der Abgaskonverter 1 weist einem Einlassbereich 3 über den der Abgasstrom 2 dem Abgaskonverter 1 zugeführt wird, und einen Auslassbereich 4 auf, der zur Abführung des Abgasstroms 2 aus dem Abgaskonverter 1 dient. Der Einlassbereich 3 und der Auslassbereich 4 sind als Öffnungen in einem beispielsweise aus Edelstahl bestehenden Gehäuse 5 ausgebildet, welches ebenfalls Teil des Abgaskonverters 1 ist.

Innerhalb des Gehäuses 5 sind mehrere Einströmkanäle 6 und mehrere, zwischen den Einströmkanälen 6 sich befindliche Ausströmkanäle 7 angeordnet. Hierbei sind die Einströmkanäle 6 mit dem Einlassbereich 3 und die Ausströmkanäle 7 mit dem Auslassbereich 4 verbunden. Die Einströmkanäle 6 und die Ausströmkanäle 7 sind im Sinne einer Parallelkanalanordnung 16 aus einer Abfolge der Einströmkanäle 6 und der Ausströmkanäle 7 innerhalb des Gehäuses 5 angeordnet und bilden zusammen mit dem Gehäuse 5 einen Abgaswärmetauscher 12.

Den Einströmkanälen 6 wird der Abgasstrom 2 aus dem Einlassbereich 3 zugeführt, dieser tritt am gegenüberliegenden Ende der Einströmkanäle 7 aus, wird in einem durch eine Haube 8 des Gehäuses 5 begrenzten Umlenkbereich 9 umgelenkt und strömt im Gegenstrom zum eintretenden Gas in den Ausströmkanälen 7 zurück. Die Hauptströmungsrichtung des Abgasstroms 2 in den Ausströmkanälen 7 ist also der Hauptströmungsrichtung des Abgasstroms 2 in den Einströmkanälen 6 im Wesentlichen entgegengerichtet. Kurz oberhalb des Einlassbereichs 3 tritt der Abgasstrom 2 dann über den Auslassbereich 4 seitlich aus dem Gehäuse 5 aus.

Ein Stapel aus geschlossenen Einströmkanälen 6 und offenen Ausströmkanälen 7, ein sogenanntes Parallelkanalpaket bzw. Parallelkanalanordnung 16 kann aus unterschiedlichem Material entweder wie im Anschluss beschrieben in einem Stück als Monolith hergestellt werden oder wie danach erläutert aus mehreren Elementen zusammengesetzt sein.

Im ersten Fall wird die Parallelkanalanordnung 16 in ähnlicher Weise wie bei der US-PS 4,271,110 aus einem nicht dargestellten Monolith, bestehend aus dichtem keramischem oder metallischem Material mit rechteckigem Kanalquerschnitt gebildet, wobei jede zweite Kanalreihe als Einströmkanal 6 und jede andere Kanalreihe als Ausströmkanal 7 genutzt wird, wobei die Ausströmkanäle 7 zum Einlassbereich 3 stirnseitig verschlossen und zum Auslassbereich 4 durch durchgehende Schlitze seitlich geöffnet sind, wobei das Gehäuse 5 mit der Haube 8 und Öffnungen für das ein- und austretende Abgas den Monolith umgibt, wobei der Einlassbereich 3 gegen den Auslassbereich 4 durch eine Dichtungseinrichtung 17 zwischen Monolith und Gehäuse 8 abgedichtet ist und die Anordnung von für die Umwandlung erforderlichen Reinigungskomponenten 15, 33, 34, 35 in der erforderlichen Reihenfolge auf bekannte Weise durch Beschichtung der Kanalwände erfolgt.

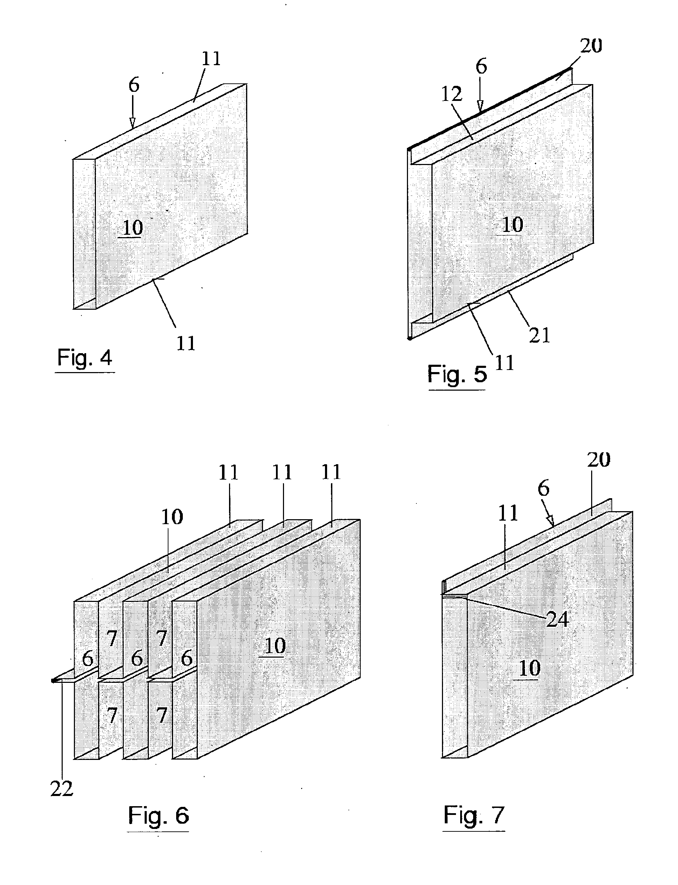

In Fig. 2 ist ein einzelner Einströmkanal 6 dargestellt. Dieser weist in diesem Fall eine flache, rechteckige Form auf und ist an je zwei Seiten von seitlichen Wandungen 10 und Stirnflächen 11 abgeschlossen. Die Einströmkanäle 6 können somit als an ihrer Mantelfläche allseitig geschlossene Kanäle betrachtet werden und sind auf diese Weise gegen die Ausströmkanäle 7 abgetrennt. Die beiden weiteren Seiten der Einströmkanäle 6 sind selbstverständlich geöffnet und führen, wie oben erwähnt, einerseits zu dem Einlassbereich 3 und andererseits zu dem Umlenkbereich 9. Die Einströmkanäle 6 können auch andere Formen aufweisen, von denen einige unter Bezugnahme auf die Figuren 4, 5, 6 und 7 beschrieben werden. Dort sind auch beispielhaft einige Herstellungsmöglichkeiten für die Einströmkanäle 6 angegeben.

Fig. 3 zeigt die Anordnung der Ausströmkanäle 7 gegenüber den Einströmkanälen 6. Dort ist erkennbar, dass die Ausströmkanäle 7 jeweils durch zwei der seitlichen Wandungen 10 benachbarter Einströmkanäle 6 gebildet werden. Die Stirnflächen der Ausströmkanäle 7 werden, wie in Fig. 1 erkennbar, durch das Gehäuse 5 gebildet, sodass die Ausströmkanäle 7 an sich keine eigenen Wandungen besitzen sondern lediglich durch Lücken bzw. Zwischenräume zwischen den Einströmkanälen 6 gebildet werden. Die Ausströmkanäle 7 können somit als offene Kanäle betrachtet werden.

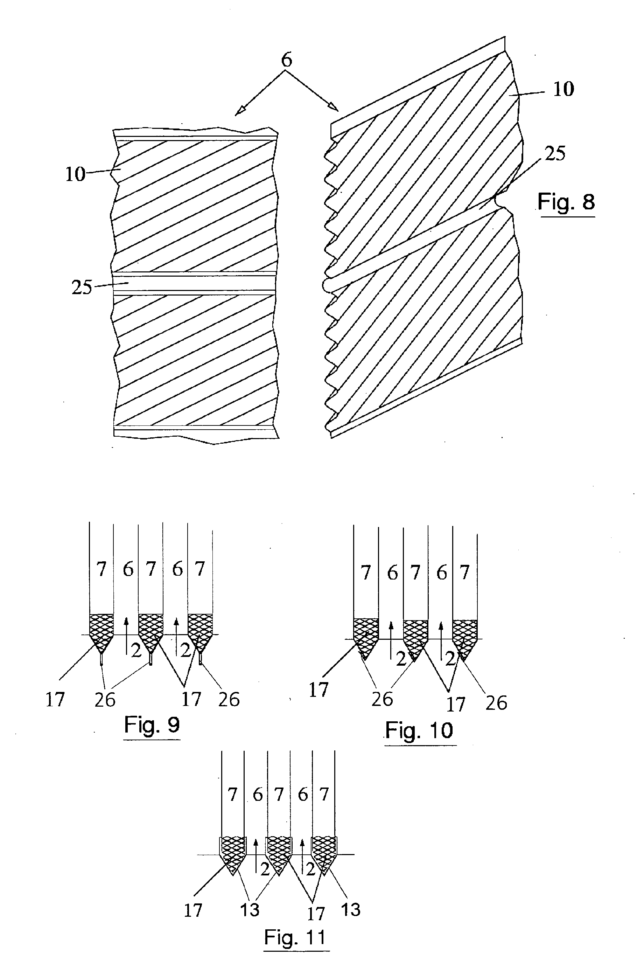

Im Inneren der Einströmkanäle 6 befinden sich jeweilige Distanzelemente 14, die zur Versteifung des Abgaskonverters 1 und zur Verbesserung des Wärmeübergangs aufgrund der vergrößerten Wärmeübertragungsfläche und der von ihnen erzeugten Rippenwirkung dienen und als Träger für Katalysatoren 15 geeignet sind. Die Distanzelemente 14 sind des Weiteren in der Lage, die Abgasströmung 2 insbesondere in dem Einlassbereich 3 und in dem Auslassbereich 4 in Querrichtung zu verteilen. Selbstverständlich können für die Distanzelemente 14 sehr viele verschiedene Formen eingesetzt werden, wobei eine hier bevorzugte Struktur durch in Wellenform profilierte Bleche, Drahtnetze oder Geflechte gebildet wird. Die Distanzelemente 14 werden dann vorzugsweise so eingebaut, dass die Wellenberge bzw. -täler in Strömungsrichtung des Abgasstromes 2 verlaufen und eine druckverlustarme Durchströmung gewährleisten. Prinzipiell können die Distanzelemente 14 sowohl wie in Fig. 8 einteilig mit den seitlichen Wandungen 10 als auch wie bisher beschrieben als separate Bauteile ausgebildet sein. Des Weiteren ist es auch möglich, dieselben innerhalb der Ausströmkanäle 7 anzubringen.

Die Katalysatoren 15, die in den Figuren 1 und 3 nur als Beschichtung auf den Distanzelementen 14 dargestellt sind, sorgen für die katalytische Reaktion der Schadstoffe in dem Abgasstrom 2, die in an sich bekannter Weise verläuft und daher hier nicht näher beschrieben wird. Die Katalysatoren 15 können prinzipiell an der Innen- und/oder Außenseite der seitlichen Wandungen 10 bzw. den Stirnflächen 11, an den Distanzelementen 14 oder in eingelegter bzw. Schüttungsform in den Einströmkanälen 6 und/oder den Ausströmkanälen 7 an den Stellen angeordnet sein, an denen sich der für die jeweilige Umwandlung günstigste Temperaturbereich einstellt. Dies gilt auch für die Speichermaterialien und Partikelfilter, die zur besseren Abscheidung und/oder Umsetzung der Schadstoffe auf der Innenseite und/oder der Außenseite der Wandungen 10 und den Stirnflächen 11 sowie auf den Distanzelementen 14 zusätzlich zu oder anstelle der Katalysatoren 15 angeordnet sein können und auf die weiter unten noch näher eingegangen wird.

Weitere Distanzelemente 14, welche insbesondere bei einer dünnen und ebenen Ausführung der seitlichen Wandungen 10 der Einströmkanäle 6 eingesetzt werden, sind in den Einströmkanälen 6 angeordnet und erstrecken sich innerhalb der Ausströmkanäle 7 von einem Einströmkanal 6 zum nächsten Einströmkanal 6, sodass die Ausströmkanäle 7 auch ohne eigene Wandungen ein starres Gebilde darstellen. Bei der Herstellung des Abgaskonverters 1 werden mehrere Einströmkanäle 6 mit Distanzelementen 14 so aufeinander gestapelt, dass zwischen den geschlossenen Einströmkanälen 6 die Zwischenräume entstehen, in denen sich die offenen Ausströmkanäle 7 ergeben. Das Parallelkanalpaket 16, das, wie in Fig. 1 erkennbar ist, von dem äußeren Gehäuse 5 umschlossen wird, bildet zusammen mit dem Gehäuse 5 den Gegenstrom-Abgaswärmetauscher 12.

Zwischen dem Einlassbereich 3 und dem Auslassbereich 4 ist eine temperaturbeständige Dichtungseinrichtung 17 angeordnet, die dafür sorgt, dass ein Gasfluss von dem Einlassbereich 3 direkt in den Auslassbereich 4 vermieden oder zumindest erheblich minimiert wird. Die Dichtungseinrichtung 17 kann mineralische und/oder grafitische Fasermaterialien und/oder Blähton und/oder eine Vergussmasse und/oder eine Schweiß- und/oder Lötverbindung aufweisen. Zwischen dem Gehäuse 5 und dem Parallelkanalpaket 16 befindet sich außerdem zweckmäßigerweise eine flexible Dichtungseinrichtung 18, die eine vibrationsarme Lage des Parallelkanalpakets in dem Gehäuse 5 gewährleistet.

Die Dichtungseinrichtung 17 ist für einen weiten Temperaturbereich ausgelegt, der bei Hochlast der Brennkraftmaschine 600 bis 700°C überschreiten kann und gewährleistet neben der Abdichtung eine feste Verbindung des Parallelkanalpakets 16 mit dem Gehäuse 5. Für die Motorabgasreinigung ist in der Regel keine vollständige Gasdichtigkeit erforderlich, da ein Gasschlupf bzw. -verlust von wenigen Prozent zwischen dem Einlassbereich 3 und dem Auslassbereich 4 die Reinigungsleistung des Abgaskonverters 1 nicht entscheidend beeinflusst.

Die feste Verbindung des Parallelkanalpakets 16 mit dem Gehäuse 5 zwischen dem Auslassbereich 4 und dem Einlassbereich 3 bewirkt, dass sich das übrige Parallelkanalpaket 16 bei Temperaturänderungen unabhängig von dem Gehäuse 5 ausdehnen kann.

Für den Aufbau und die Herstellung der Einströmkanäle 6 existieren vielfältige Möglichkeiten. Sie werden vorzugsweise aus Blech, insbesondere einem Edelstahlblech, gefertigt, das die notwendigen Eigenschaften bezüglich Temperatur- und Korrosionsfestigkeit besitzt. Alternativ hierzu können die Einströmkanäle 6 auch aus Keramik hergestellt werden, welche im Wärmetauschbereich 12 hinreichend gasdicht sein soll.

Die Figuren 4, 5, 6 und 7 zeigen verschiedene Ausführungsformen zur Bildung der Einströmkanäle 6, welche allesamt aus Blech bestehen. In der Grundstruktur gemäß Fig. 4 ist der Einströmkanal 6 mit einem rechteckigen Querschnitt ausgebildet und kann nahtlos geschweißt oder gelötet sein.

Der Einströmkanal 6 gemäß Fig. 5 besteht aus einem oder mehreren Teilen, wobei sich im vorliegenden Fall zwischen der seitlichen Wandung 10 und der oberen Stirnwand 11 eine Längsnaht 20 sowie zwischen der seitlichen Wandung 10 und der unteren Stirnwand 11 eine Längsnaht 21 befindet, die beide durch Umbiegen des Blechwerkstoffes entstehen.

Der in Fig. 6 dargestellte Aufbau der Einströmkanäle 6 weist ziehharmonikaförmige Mehrfachtaschen auf, welche die geschlossenen Einströmkanäle 6 bilden. Auch hier ist zwischen zwei aufeinander folgenden Einströmkanälen 6 jeweils ein offener Ausströmkanal 7 vorgesehen. Dabei ist im mittleren Bereich der seitlichen Wandung 10 des linken Einströmkanals 6 eine Längsnaht 22 vorgesehen, welche anstatt des durchgehenden Bleches im Bereich der seitlichen Wandung 10 des rechten Einströmkanals 6 auch dort vorgesehen sein könnte. Somit entspricht der in Fig. 6 dargestellte Aufbau dem Parallelkanalpaket 16, welches in diesem Fall vier miteinander verbundene, geschlossene Einströmkanäle 6 und sechs durch jeweilige Mittelstege 23 getrennte, offene Ausströmkanäle 7 aufweist. Selbstverständlich könnte auch jede beliebige andere Anzahl an Einströmkanälen 6 und Ausströmkanälen 7 vorgesehen sein.

Um die Einströmkanäle 6 abzudichten, kann bei der Ausführungsform der Einströmkanäle 6 gemäß Fig. 7 im Bereich der oberen Stirnwand 11 ein Dichtstreifen 24 vorgesehen sein, der mit der oberen Längsnaht 20 kombiniert ist. Diese schon sehr gute, jedoch nicht absolute Gasdichtigkeit der Einströmkanäle 6 kann dabei sowohl durch den alleinigen Einsatz des Dichtstreifens 24 als auch allein durch die Falzung der Längsnaht 20 erreicht werden. Die dargestellte Kombination dieser beiden Merkmale gewährt jedoch die größte Dichtheit.

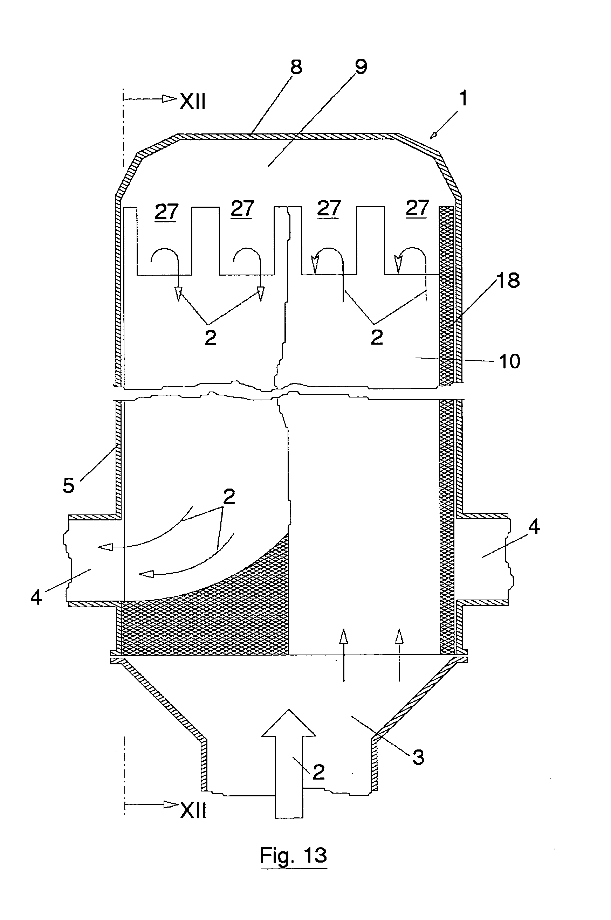

Die seitlichen Wandungen 10 der Einströmkanäle 6 können entweder, wie in den Figuren 4 bis 7 dargestellt, glatt sein, wobei es dann sinnvoll ist, zur Versteifung des Abgaskonverters 1 die Distanzelemente 14 in die Einströmkanäle 6 und/oder die Ausströmkanäle 7 einzulegen. Gemäß der in Fig. 8 dargestellten Ausführungsform der seitlichen Wandungen 10 sind dieselben mit einer solchen Prägestruktur versehen, dass die sich gegenüberliegenden seitlichen Wandungen 10 sich gegenseitig abstützen sowie für einen guten Wärmeübergang, eine gezielte Strömungsführung und eine gute Quervermischung sorgen. In der dargestellten Ausführungsform sind die Wandungen 10 wellförmig geprägt und weisen in Längsrichtung verlaufende Sicken 25 auf. Wenn die mit den schräg verlaufenden Wellen geprägten Wandungen 10 über die in Längsrichtung verlaufenden Sicken 25 zusammengefaltet werden, so kann ein Einströmkanal 6 wie in Fig. 6 dargestellt hergestellt werden. Dieser weist dann eine eingeprägte, gekreuzte Wellstruktur auf. Auf diese Weise lässt sich auch das Parallelkanalpaket 16 nach Fig. 6 oder nach den später noch erläuterten Figuren 12 und 13 durch Faltung aus einem fortlaufend geprägten Blechband herstellen.

Um den Druckverlust des Abgasstroms 2 in dem Einlassbereich 3 des Abgaskonverters 1 zu verringern, können die Einströmkanäle 6 gemäß den Ausführungsformen der Figuren 9, 10 und 11 mit verschiedenen Einlaufformen ausgeführt werden. Bei der Ausführungsform gemäß Fig. 9 berühren sich die seitlichen Wandungen 10 von aufeinander folgenden Einströmkanälen 6, was eine Vergrößerung der Öffnungen der Einströmkanäle 6 zur Folge hat. Die seitlichen Wandungen 10 von aufeinander folgenden Kanälen können dabei beispielsweise über Klebeverfahren bzw. über Punkt- oder Linienverschweißung miteinander verbunden werden.

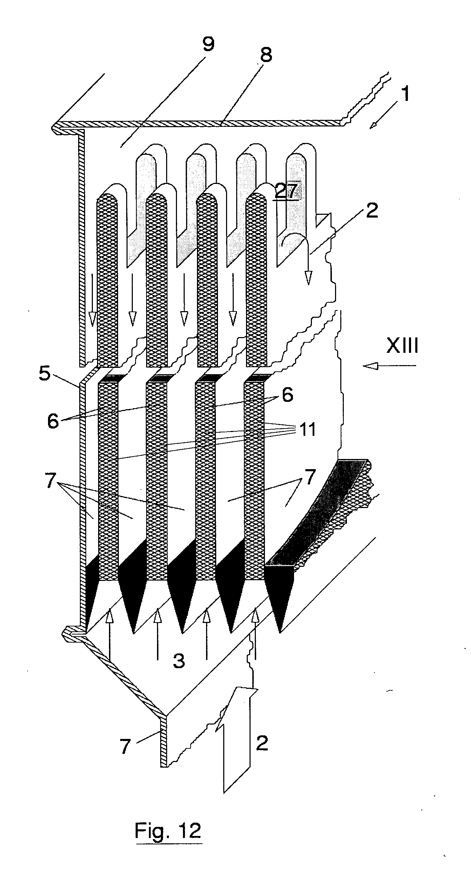

Bei der Ausführungsform gemäß Fig. 9 und 10 sind außerdem die seitlichen Wandungen 10 der geschlossenen Einströmkanäle 6 über den eigentlichen Eintritt in die Einströmkanäle 6 hinaus in Richtung des Einlassbereiches 3 verlängert, was zu Vorsprüngen 26 führt. Diese Vorsprünge 26 können beim Zusammenbau des Parallelkanalpakets 16 wie in Fig. 10 dargestellt über das entsprechend geformte Dichtmaterial der Dichtungseinrichtung 17 zurückgebogen werden, sodass sich eine strömungsgünstige Anströmung der Einströmkanäle 6 ergibt. Fig. 11 zeigt eine Ausführung ohne die Vorsprünge 26, bei der das Dichtmaterial 17 durch strömungsgünstig geformte Kappen 13, welche vorzugsweise aus Blech bestehen, abgedeckt ist, die durch Distanzelemente 14 in den Einströmkanälen 6 festgeklemmt sind.

Eine weitere Möglichkeit zum Aufbau des Parallelkanalpakets 16 zeigen die Figuren 12 und 13. Dabei sind die seitlichen Wandungen 10 der Einströmkanäle 6 mäanderförmig nach oben und unten gefaltet, im Gegensatz zur Darstellung gemäß Fig. 6, jedoch nicht in Strömungsrichtung sondern senkrecht dazu. Der Abgasstrom 2 tritt in die auch weiterhin an ihrer Unterseite offenen, taschenförmigen Einströmkanäle 6 ein. Sie sind über ihrer ganzen Länge an ihren Stirnseiten 11 in Richtung des Gehäuses 5 abgedichtet. In dem Umlenkbereich 9 befinden sich in den seitlichen Wandungen 10 der Einströmkanäle 6 jeweils Öffnungen 27, durch welche der Abgasstrom 2 in den Umlenkbereich 9 und damit in die Ausströmkanäle 7 übertritt. Auch hier bilden die den Einströmkanälen 6 unmittelbar benachbarten Zwischenräume die Ausströmkanäle 7, durch welche der Abgasstrom 2 zurückströmt. Das umschließende Gehäuse 5 ist wie in Fig. 1 unten seitlich geöffnet, um dem Abgasstrom 2 das Verlassen des Abgaskonverters 1 über den Auslassbereich 4 zu erlauben. Anstelle der hier dargestellten, durchgehenden, mehrfach mäanderförmig gefalteten Wandung, die die seitlichen Wandungen 10 bildet und die Öffnungen 27 aufweist, könnte das Parallelkanalpaket 16 gemäß Fig. 12 und Fig. 13 auch aus mehreren, lediglich an ihrer Unterseite gefalteten Wandungen bestehen, die nach oben offen sind. Diese strömungsgünstige Form des Eintritts in die Einströmkanäle 6 ist auch bei der bereits zuvor beschriebenen Ausführungsform gemäß der Figuren 12 und 13 angewendet.

Der Abgaskonverter 1 wird wie nachfolgend beschrieben betrieben: Das Abgas tritt in Form des Abgasstroms 2 durch den Einlassbereich 3 in die Einströmkanäle 6 des Parallelkanalpakets 16 ein, tritt an der oberen Öffnung derselben aus, wird in dem Umlenkbereich 9 umgelenkt und strömt in den Ausströmkanälen 4 zurück, wobei es seine Wärme an das einströmende Abgas abgibt und entsprechend abgekühlt den Abgaskonverter 1 durch den seitlichen Auslassbereich 4 verlässt. An den in den Einströmkanälen 6 und den Ausströmkanälen 7 angebrachten Katalysatoren 15 kann die gewünschte Umwandlung stattfinden.

Bei bestimmten Ausführungen, in bestimmten Einbausituationen oder bei bestimmten Anforderungen kann es zweckmäßig sein, die Strömungsrichtung des Abgasstroms 2 umzudrehen, d.h. das Abgas seitlich dem Auslassbereich 4 und somit den offenen Auslasskanälen 7 zuzuführen und am Einlassbereich 3 abzuziehen. Dies gilt für sämtliche hierin beschriebenen Ausführungsformen des Abgaskonverters 1, wobei die prinzipielle Funktionsweise desselben dadurch nicht beeinflusst wird. Die axiale Anströmung der Einlasskanäle 6 ist in einem solchen Fall allerdings nicht mehr gegeben.

### Wärmequelle und Erzeugung von Reduktionsmittel

In dem Umlenkbereich 9 ist eine Wärmezufuhreinrichtung 19 angeordnet, die insbesondere beim Anfahren des kalten Abgaskonverters 1 erforderlich ist, wobei die Wärmezufuhr durch eine elektrische Heizung, durch die Zufuhr eines heißen Gases oder durch einen in der Umlenkung installierten thermischen oder katalytischen Brenner erfolgen kann.

Eine besondere Ausgestaltung stellt ein elektrisch gezündeter Edelmetallkatalysator dar, der mit einem Gemisch eines sauerstoffhaltigen Gases und Kraftstoff beaufschlagt wird. Er ist zweckmäßig wie bei einem sogenannten E-Kat aufgeteilt in einen elektrisch beheizbaren Vorkatalysator 31 und einen daran anschließenden Hauptkatalysator 32. Zum Anfahren und zum schnellen Aufheizen wird er mit einem mageren (sauerstoffreichen) Kraftstoff-Gasgemisch betrieben, dessen Zusammensetzung so eingestellt ist, dass die thermische Belastung des verwendeten Materials nicht überschritten wird.

Zur Erzeugung eines H₂/CO-Wasserstoff-Gemischs als Reduktionsmittel für die Stickoxidumwandlung wird der katalytische Brenner 19 mit einem fetten (sauerstoffarmen) Kraftstoff-Gasgemisch betrieben, wobei der Kraftstoff nur partiell oxidiert wird. In diesem Betriebszustand kann die Zugabe von Wasser zur Begrenzung der Maximaltemperatur und zur Erzeugung eines wasserstoffreichen Reduktionsmittels sinnvoll sein.

Die Wärmezufuhreinrichtung 19 kann daher erfindungsgemäß zum Aufheizen des Abgaskonverters 1 bei Kaltstart, zur Einstellung und Aufrechterhaltung einer optimalen Temperaturverteilung in den Katalysatorbereichen, zur Erzeugung von Reduktionsmittel, zum Zünden des Abbrands von partikelförmigen Ablagerungen und zur Hochtemperaturentschwefelung von zu einem späteren Zeitpunkt beschriebenen NOₓ-Speicherkatalysatoren eingesetzt werden. Dazu ist sie mit einer eigenen, nicht dargestellten Steuereinheit zu versehen, die die Luftund Brennstoffzufuhr nach Bedarf verändert.

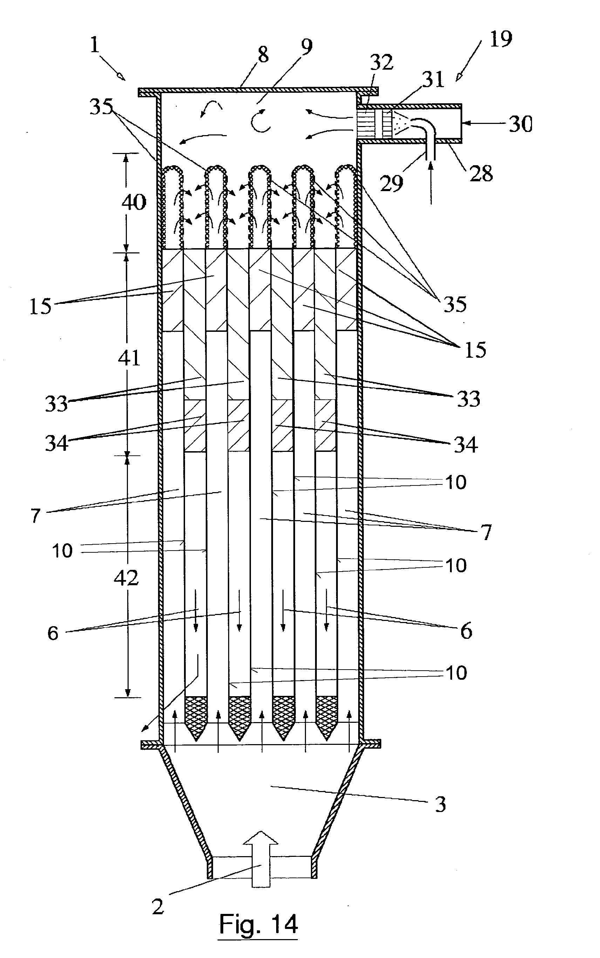

Fig. 14 zeigt eine Ausführungsform der Wärmezuführeinrichtung 19 in Form des katalytischen Brenners 19 zur Zuführung von Wärme in den Umlenkbereich 9 des Abgaskonverters 1. Der katalytische Brenner 19 weist dabei einen Zuführstutzen 28 auf, in welchen über eine Kraftstoffleitung 29 Kraftstoff eingespritzt und über eine Gaszuführung 30 mit Sauerstoff vermischt und verdüst wird. Dies stellt eine Möglichkeit zur Wärmezufuhr innerhalb des Abgaskonverters 1 dar, durch welche eine eigenständige Regelung der Temperatur innerhalb des Abgaskonverters 1 auf den Bereich optimaler Betriebsbedingungen erreicht werden kann. In dem Zuführstutzen 28 befinden sich des Weiteren ein elektrisch beheizbarer Monolithkatalysator bzw. Vorkatalysator 31 und gegebenenfalls ein weiterer Nachkatalysator 32. Die Gaszuführung 30 kann ein Zusatzluftstrom oder ein Teilstrom des (sauerstoffhaltigen) Abgasstroms 2 sein. Das Kraftstoff-Gasgemisch wird über den Monolithkatalysator 31 und 32 geführt, dabei voll- oder teiloxidiert und dem Abgasstrom 2 in dem Umlenkbereich 9 so zugeführt, dass sich eine gleichmäßige und vollständige Vermischung ergibt. Der katalytische Brenner 19 soll derart mit der Haube 8 des Gehäuses 5 verbunden sein, dass das Brenngas in den Umlenkbereich 9 zugeführt und auf alle Einströmkanäle 6 und Ausströmkanäle 7 gleichmäßig verteilt wird. Eine solche Verteilung kann auch durch zusätzliche Maßnahmen, wie z.B. Lochoder Führungsbleche unterstützt werden.

### Stickoxidumwandlung

Allen für eine NOₓ-Umwandlung in molekularen Stickstoff bekannten Verfahren ist gemeinsam, dass sie erst bei höheren Temperaturen (300 - 400°C) zu brauchbaren Umsätzen führen. Die Abgastemperaturen von Otto-Magermotoren und insbesondere Dieselmotoren liegen in vielen Betriebsbereichen häufig niedriger, sodass die nachfolgend beschriebene, gezielte und energieeffiziente Anhebung der Abgastemperatur unabhängig von der Motorsteuerung für alle technisch üblichen Verfahren der NOx-Reduktion von Vorteil ist.

Besondere Vorteile ergeben sich für das sogenannte Speicherkat-Konzept bei Magermotoren, bei dem NO und/oder NO₂ im Katalysator gespeichert wird. Ist die Speicherkapazität erschöpft, so muss der Speicher regeneriert werden. Dazu wird kurzzeitig ein reduzierendes Abgas mit einem erhöhten Gehalt an CO und Wasserstoff erzeugt. Damit wird die Speicherfähigkeit des Katalysators wieder hergestellt und das gespeicherte oder freigesetzte NOₓ mit Wasserstoff oder CO zu Stickstoff und Wasser oder CO₂ umgewandelt.

Wie bereits erläutert kann das hierfür erforderliche Reduktionsmittel statt wie bisher durch Nacheinspritzung im Motor zweckmäßigerweise durch partielle Oxidation und/oder Reformierung in dem katalytischen Brenner 19 des Abgaskonverters 1 erzeugt werden. Ein hierfür vorgesehener NOₓ-Umwandlungs- und/oder -speicherkatalysator 33 wird daher zweckmäßig in den Ausströmkanälen 7 unmittelbar hinter dem Umlenkbereich 9 angeordnet, wenn das Reduktionsmittel in dem Umlenkbereich 9 zugegeben wird. Hinter dem Speicherkatalysator kann sich ein Oxidationskatalysator 34 mit Sauerstoffspeicherfähigkeit anschließen, um das Durchbrechen von nicht umgesetztem CO und H₂ während der Regenerationsphase zu verhindern.

Der Kraftstoffverbrauch kann dadurch deutlich reduziert werden, dass der Abgaskonverter 1 in Form von mindestens zwei parallel durchströmten Modulen angeordnet ist und der Abgasdurchsatz durch den zu regenerierenden Modul vorübergehend stark reduziert wird, sodass nur für einen kleinen Abgasstrom reduzierende Bedingungen eingestellt werden müssen. Wenn auf diese Weise mindestens zwei im wesentlichen baugleiche Abgaskonverter 1 parallel betrieben werden, so kann ein Verfahren zur Reinigung von Abgasen mit NOₓ-haltigen und/oder partikel- bzw. rußförmigen Abgasbestandteilen, vorzugsweise zur Reinigung des Abgases aus mager betriebenen Brennkraftmaschinen, durchgeführt werden, bei dem für den Zeitraum der Regeneration des NOₓ-Umwandlungs- und/oder -Speicherkatalysators 33 oder des Partikelfilters 35 der Abgasstrom durch die zu regenerierende Einheit gedrosselt wird, sodass die Regeneration mit einem deutlich reduzierten Zusatzenergieoder Regenerationsmittelverbrauch durchgeführt werden kann.

Mit der Bereitstellung von Reduktionsmittel durch partielle Oxidation in dem katalytischen Brenner 19 findet ein Wärmeeintrag in dem Umlenkbereich 9 statt. Dadurch kann der Zusatzwärmebedarf für die Aufheizung des Abgases auf die erforderliche Umwandlungstemperatur erfindungsgemäß (weitgehend) gedeckt werden, wenn der Wärmerücktausch in dem Abgaswärmetauscher 12 wirksam genug ausgeführt wird.

Im Fall des NOₓ-Speicherkatalysators 33 erfolgt diese Wärmezufuhr nur im Takt der Regeneration des NOₓ-Speicherkatalysators 33. Dann stellt sich an dem NOₓ-Speicherkatalysators 33 ein in einer bestimmten Bandbreite schwankender Temperaturverlauf ein. Für die Funktion des NOₓ-Speicherkatalysators 33 kann dies ein zusätzlicher Vorteil sein, wenn die Einspeicherung von NOₓ auch bei Temperaturen bis unter 300°C brauchbar abläuft, während für eine schnelle und vollständige Regeneration höhere Temperaturen vorteilhaft sind.

Auch die bei dem NOₓ-Speicherkatalysator 33 gegebenenfalls notwendige gelegentliche Hochtemperatur-Schwefelregeneration kann durch Kraftstoffverbrennung über den katalytischen Brenner 19 eingeleitet werden.

Fig. 14 zeigt eine Anordnung, bei der der Abgaswärmetauscher nach Art von Fig. 12 und 13 durch mäanderförmige Faltung der Wandung 10 hergestellt ist. Der katalytische Brenner 19 wird so betrieben, dass er periodisch reduzierendes (CO- und H₂-haltiges) Brenngas erzeugt, das dem Abgas in dem Umlenkbereich 9 zugemischt wird. In den Ausströmkanälen 7 befinden sich hintereinander der NOₓ-Speicherkatalysator 33 und gegebenenfalls der Oxidationskatalysator 34 mit Sauerstoffspeicherfähigkeit. In den Einströmkanälen 6 kann vor dem Umlenkbereich 9 der Oxidationskatalysator 15 angeordnet sein, der für eine Umsetzung brennbarer gasförmiger Schadstoffe sorgt und NO zu NO₂ aufoxidiert.

Nachstehend wird auf Partikelfilter 35 eingegangen, die entfallen können, wenn das Abgas keine Partikel enthält.

### Partikelfilter und ihre Regeneration

Enthält das Abgas brennbare Partikel (Sporen, Mikroorganismen, organische Stäube, Ruß) so sollen diese so lange im heißen Bereich des Abgaskonverters 1 verweilen, bis sie umgewandelt oder vollständig verbrannt sind. Dazu muss ihre Verweilzeit in der Regel gegenüber der Gasverweilzeit deutlich verlängert werden.

Das erfolgt erfindungsgemäß durch eine Verzögerung des Partikeltransports durch häufigen Wandkontakt, also dadurch, dass die Partikel beim Durchtritt durch den Partikelfilter 35 im Vergleich zum Gasstrom stark verzögert werden, oder durch eine Abfilterung mit kontinuierlichem oder periodischem Abbrand auf dem Partikelfilter 35.

Die erfindungsgemäße Lösung eines intrinsisch sicheren Partikelfilterabbrands kann auf mehreren Wegen erfolgen. Eine Lösung besteht darin, den Partikelfilter 35 die ganze Zeit bei so hoher Temperatur zu betreiben, dass die Verweilzeit der Partikel für einen vollständigen Abbrand ausreicht und keine Akkumulation der Beladung stattfindet.

Eine zweite Lösung besteht darin, dass der Abbrand durch periodische Wärmezufuhr in so kurzen Intervallen erfolgt, dass sich keine hohe Filterbeladung aufbaut. Aufgrund des effizienten Wärmerücktauschs in dem erfindungsgemäßen Abgaskonverter 1 sind beide Wege ohne wesentlich erhöhte Energiezufuhr möglich. Bei hoher Partikelkonzentration kann zudem die beim Abbrand freigesetzte Wärme den Wärmebedarf für die erforderliche Abgasaufheizung decken. In diesem Fall ist die Wärmezufuhreinrichtung 19 in Strömungsrichtung vor dem Partikelfilter 35, d.h. in einem Filtervorraum 37 anzuordnen.

Eine dritte erfindungsgemäße Lösung besteht darin, die Gasströmung durch den Partikelfilter 35 so zu führen, dass es nicht zu dem eingangs beschriebenen Anstieg der Filtertemperatur mit der stromab laufenden Abbrandfront kommt. Das ist dann der Fall, wenn die Strömung in dem Partikelfilter 35 so umgelenkt wird, dass sich ein Gegenstrom oder ein Kreuz-(gegen-)strom zwischen dem in das Partikelfilter 35 ein- und dem aus dem Partikelfilter 35 ausströmenden Abgas einstellt.

Diese Gegenstromführung lässt sich wegen des ohnehin vorhandenen Gegenstromwärmetauschers 12 im erfindungsgemäßen Abgaskonverter 1 gemäß Fig. 14 besonders einfach realisieren, wenn die Öffnungen 27 in den Einströmkanälen 6 im Umlenkbereich 9 mit einem Partikelfilter 35 verschlossen werden, sodass das Abgas durch dieses Partikelfilter 35 in die Ausströmkanäle 7 übertritt. Die Ausströmkanäle 7 sind zur Haube 8 hin offen. Zur Zündung des Abbrands tritt heißes Brenngas aus der Wärmezufuhreinrichtung 19 in die Ausströmkanäle 7 ein, wobei die Zündung stets im Gegenstrom zum eintretenden Abgas erfolgt.

Da infolge des Gegenstromwärmetauschs die beim Filterabbrand freigesetzte Wärme vorzugsweise in dem Umlenkbereich 9 gespeichert wird und dort zu einem stetigen Temperaturanstieg führen kann, besteht eine Option darin, während des Filterabbrands das aus dem Partikelfilter 35 austretende heiße Abgas aus dem Umlenkbereich 9 teilweise oder ganz direkt abzuführen und dabei die Ausströmkanäle 7 des Abgaswärmetauschers 12 zu umgehen.

Auch keramische Wabenmonolithe mit rechteckigem Einzelkanalquerschnitt, wie sie in der US-PS 4,271,110 beschrieben werden, eignen sich als im Gegenstrom betriebener Partikelfilter 35, wenn die Monolithe aus einer entsprechend porösen Filterkeramik hergestellt und die Kanalreihen der Einströmkanäle 6 jeweils am oberen Ende und die der Ausströmkanäle 7 am unteren Ende verschlossen werden. Wird die poröse Keramik im unteren Bereich des Monoliths durch eine Glasur oder Beschichtung abgedichtet, so enthält ein entsprechend aufgebauter Monolith im unteren Teil den Gegenstrom-Abgaswärmetauscher 12 und im oberen Teil den keramischen Partikelfilter 35. Eine abschnittsweise Beschichtung der Monolithkanäle mit Katalysator kann in bekannter Weise erfolgen.

Bei dieser Vorrichtung kann in nicht dargestellter Weise der für die Parallelkanalanordnung 16 eingesetzte Monolith über der ganzen Länge oder zumindest im Umlenkbereich 9 aus einer porösen Filterkeramik oder einem porösen, für die Partikelfilterung geeigneten Metall hergestellt sein, wobei dessen Einströmund/oder Ausströmkanäle, beginnend am Einlassbereich 3 über die Länge der Wärmetausch- und Katalysatorbereiche 41, 42 mit einer Glasur oder einer zumindest weitgehend gasdichten Beschichtung versehen sein können. Die Einströmkanäle 6 sollten an ihrer zur Haube 8 gerichteten Stirnfläche verschlossen sein, sodass das Abgas im porösen, gasdurchlässigen Bereich des Monoliths von den Einströmkanälen 6 in die Ausströmkanäle 7 übertritt und dabei gefiltert wird. Dabei kann der Abbrand der auf dem Filter abgeschiedenen Partikel durch eine im Bereich der Haube 8 in das Filter integrierte elektrische Heizung oder durch das in die Haube 8 zugeführte heiße Brenngas aus einen thermischen oder katalytischen Brenner 19 initiiert werden.

Die für einen periodischen Filterabbrand notwendige Wärmezufuhr zum Zünden des Abbrands lässt sich ähnlich wie bei der Regeneration des NOₓ-Speicherkatalysators 33 dadurch wesentlich reduzieren, dass mindestens zwei baugleiche Abgaskonvertermodule parallel betrieben werden, wobei der Durchsatz durch den zu regenerierenden Partikelfilter 35 zum Zündens des Rußabbrands deutlich reduziert wird.

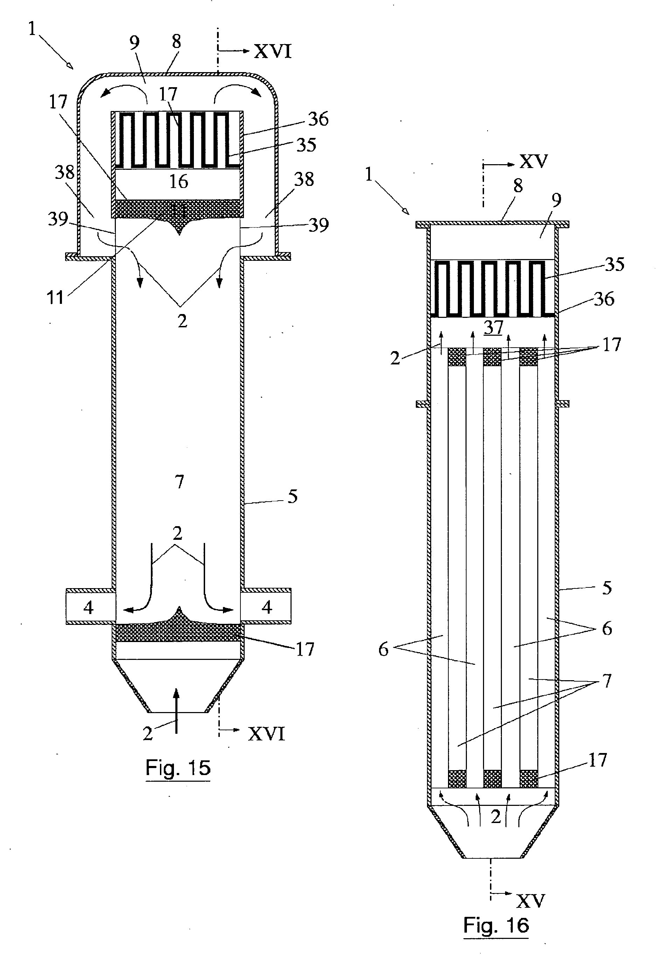

In den Ausführungsformen des Abgaskonverters 1 gemäß den Figuren 15 und 16 ist der Partikelfilter 35 am oberen Endbereich der Einströmkanäle 6, also in dem dem Umlenkbereich 9 zugewandten Bereich derselben angeordnet. Der im vorliegenden Fall herkömmliche, beispielsweise keramische Partikelfilter 35, wird vom dem eintretenden Abgasstrom 2 aus den Einströmkanälen 6 durchströmt und der durch den Partikelfilter 35 gefilterte Abgasstrom tritt aus dem Partikelfilter 35 in die Ausströmkanäle 7 über.

Der Partikelfilter 35 ist partikeldicht in einem von dem Gehäuse 5 gebildeten Filterkanal 36 eingepasst und in Strömungsrichtung des Abgasstroms 2 hinter einem Filtervorraum 37 angeordnet. Die für einen Abbrand des Partikelfilters 35 erforderliche Wärme wird vorzugsweise, wie nachfolgend beschrieben in diesem Filtervorraum 37 elektrisch oder über ein Brenngas oder durch katalytische Verbrennung von Abgasbestandteilen zugeführt. Das den Partikelfilter 35 verlassende, partikelfreie Gas wird in seitlichen Kanälen 38 außerhalb des Filterkanals 35 geführt und gelangt über seitliche Öffnungen 39 in der Wandung des Gehäuses 5 in die offenen Ausströmkanäle 7, in denen es wie bei den zuvor beschriebenen Ausführungen zurückströmt.

In den Ausströmkanälen 7 können einer oder mehrere, nicht dargestellte Oxidationskatalysatoren angeordnet sein, um die beim Abbrand der Partikelfilterbeladung häufig auftretenden Schadstoffe, wie Kohlenmonoxid und unverbrannte Kohlenwasserstoffe umzusetzen. Der durch NO₂ bewirkte oder verstärkte Rußabbrand nach dem sogenannten CRT-Verfahren (continuous regenerating trap) lässt sich in dem Aufbau nach den Figuren 15 und 16 zweckmäßig dadurch realisieren, dass in den geschlossenen Einströmkanälen 6 vor dem Eintritt in den Filtervorraum 37 und/oder im Filtervorraum 37 selbst ein weiterer, nicht dargestellter Katalysator angeordnet ist, der NO zu NO₂ aufoxidiert.

Die für einen kontinuierlichen oder periodischen Abbrand des Partikelfilters 35 notwendige Wärmezufuhr kann beispielsweise durch elektrische Erwärmung in dem Partikelfilter 35 selbst erfolgen oder es kann eine für eine entsprechende Wärmezufuhr geeignete Einrichtung vorgesehen sein. Dabei kann zweckmäßigerweise der unter Bezugnahme auf Fig. 14 beschriebene katalytischer Brenner 19, der kontinuierlich oder periodisch mit Kraftstoff und einem Zusatzluftstrom betrieben werden kann, verwendet werden.

Die Figuren 14, 17, 18 und 19 zeigen eine alternative Ausführungsform des Partikelfilters 35, der in diesem Fall in Form der eingangs erwähnten Gegenstromfilteranordnung ausgebildet ist. Dabei finden der Zustrom zu dem Partikelfilter 35 und der Abstrom aus demselben im Gegenstrom bzw. im gekreuzten Gegenstrom statt. Dadurch wird die Gefahr eines unkontrollierbaren Temperaturanstiegs beim Abbrand des Partikelfilters 35 im Vergleich zu der Gleichstromanordnung gemäß der Ausführung der Figuren 15 und 16 minimiert.

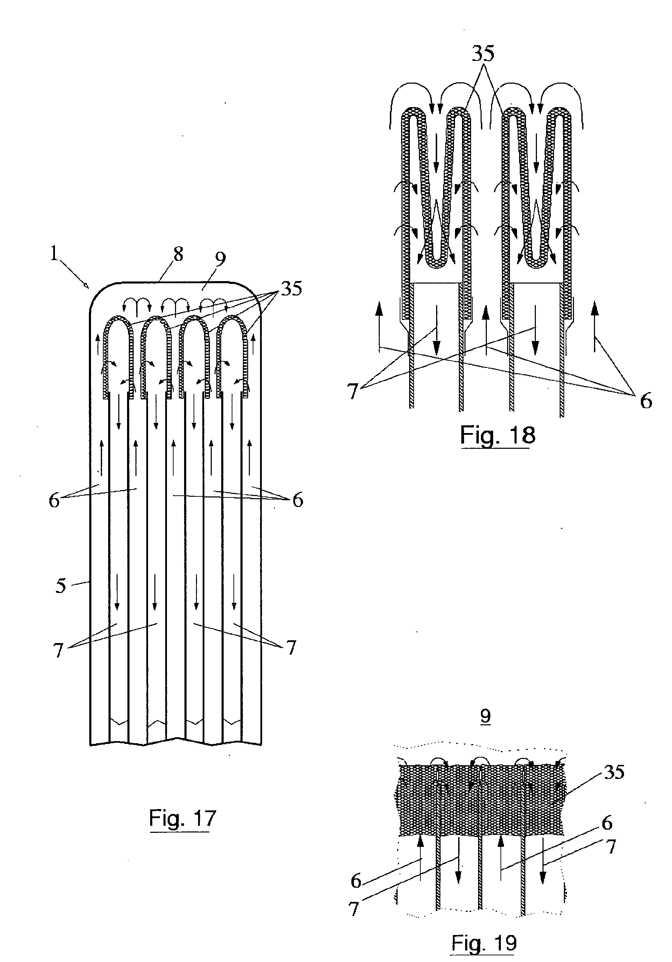

In Fig. 14, 17 und 18 sind am Eintritt der Ausströmkanäle 7 Partikelfilter 35 angebracht, die als Taschen aus poröser Keramik, aus Gewebe oder aus Faservlies ausgebildet sind und durch die der Abgasstrom 2 aus den Einströmkanälen 6 in die Ausströmkanäle 7 übertritt. Durch die in Fig. 18 dargestellte mehrfache Faltung der Filtertasche kann eine Erhöhung der wirksamen Filterfläche des Partikelfilters 35 erreicht werden.

In den Fig. 17 und 18 erfolgt die Durchströmung der Filtertaschen 35 von außen nach innen. Dies ist in Fig. 14 gezeigt. Alternativ können die Filtertaschen 35 auch am Austritt der Einströmkanäle 6 angebracht werden, sodass die Filterung von innen nach außen erfolgt. Das bietet sich besonders für die in den Figuren 12 und 13 dargestellte Ausführung der Einströmkanäle 6 an, die sich besonders einfach mit einem solchen nach dem Gegenstromprinzip arbeitenden Partikelfilter 35 versehen lassen, indem die Öffnungen 27 durch in die obere Faltung eingelegte Filtermaterialien verschlossen werden. Alternativ kann bei der Ausführung des Abgaskonverters 1 gemäß der Figuren 12 und 13 das Material der seitlichen Wandungen 10 im Bereich der oberen Faltung durch ein Filtermaterial ersetzt werden.

Ein eigenständiger (Kreuz-)Gegenstromfilter lässt sich des Weiteren auch aus einem flexiblen Band aus Filtermaterial dadurch herstellen, dass das Band in gleicher Weise wie die Trennwand in den Figuren 12 und 13 mäanderförmig in einem Gehäuse angeordnet wird.

Neben der Abscheidung und Fixierung der zu entfernenden Partikel mittels des Partikelfilters 35, der hinreichend fein ausgeführt ist, kann alternativ oder zusätzlich auch die Verweilzeit der Partikel in dem Umlenkbereich 9 im Vergleich zu der Verweilzeit des Gases so verlängert werden, dass diese für die gewünschte Umwandlung ausreicht. Das wird insbesondere bei ausreichend hoher Temperatur im Umlenkbereich 9 der Fall sein. Zum Erreichen dieser Verlängerung der Verweilzeit sind poröse Materialien mit großer innerer Oberfläche, wie beispielsweise offenporige Schäume, Fasergeflechte oder Vliese geeignet, die in den Einströmkanälen 6 und/oder den Ausströmkanälen 7 in dem Umlenkbereich 9 angeordnet sind, wie dies in Fig. 19 dargestellt ist. Die Partikelabscheidung kann durch elektrostatische Aufladung, zu welcher innerhalb des Gehäuses 5 entsprechende, nicht dargestellte Vorrichtungen angeordnet sein können, erhöht werden. Die Umwandlungstemperatur kann in bekannter Weise durch katalytisch wirkende Beschichtung der porösen Materialien oder die Zugabe katalytisch wirkender Substanzen zum Kraftstoff erhöht werden.

### Integration unterschiedlicher Abgasbehandlungsfunktionen

Die zuvor beschriebenen verschiedenen Umwandlungsfunktionen können in Abhängigkeit vom jeweiligen Anwendungsfall in den Abgaskonverter 1 integriert werden. Nachfolgend wird dies beispielhaft für die vollständige Dieselabgasreinigung an der Ausführungsform des Abgaskonverters 1 gemäß Fig. 14 gezeigt: Dabei sind die Einströmkanäle 6 und die Ausströmkanäle 7 wie bei der Ausführungsform gemäß der Figuren 12 und 13 aus einem mäanderförmig nach oben und unten geführten Blechband geformt. Das Blechband ist in einem mit dem Bezugszeichen 40 bezeichneten Bereich der oberen Faltung perforiert und von innen mit einem für die Filterung von Dieselruß geeigneten Filtergewebe belegt, sodass auf diese Weise der Partikelfilter 35 entsteht. Der Abgaskonverter 1 ist außerdem in zwei weitere, mit den Bezugszeichen 41 und 42 bezeichnete Bereiche aufgeteilt. An der Haube 8 des Gehäuses 5 ist wiederum zur Zufuhr von Wärme und reduzierendem Gas der katalytische Brenner 19 angeordnet, der für die Aufheizung bei Kaltstart, für das Zünden des Rußabbrands, für die Bereitstellung eines Regenerationsgases, für die Regeneration des NOₓ-Speicherkatalysators 33 und gegebenenfalls für eine Hochtemperaturregeneration des NOₓ-Speicherkatalysators 33 bei einer eventuellen Schwefelvergiftung verwendet werden kann.

Der katalytische Brenner 19 kann zu diesen Zwecken mit einem veränderlichen Kraftstoff-Gasgemisch betrieben und über die in den Bereichen 40 und 41 innerhalb des Abgaskonverters 1 gemessenen Temperaturen in seiner Heizleistung geregelt werden. Der untere Bereich 42 des Abgaskonverters 1 dient als reiner Gegenstromwärmetauscher für die Aufheizung des eintretenden Abgases. Durch die nicht dargestellten Einrichtungen zur Temperaturmessung ergibt sich zusammen mit dem katalytischen Brenner 19 eine Regeleinrichtung zur Regelung der Temperatur in dem Umlenkbereich 9 in Abhängigkeit der Betriebsbedingungen des Abgaskonverters 1. Diese Regeleinrichtung stellt sicher, dass die Katalysatoren 15 stets in einem optimalen Temperaturbereich arbeiten und der katalytische Brenner 19 in den für eine Entstickung notwendigen Intervallen ein reduzierendes Gas zur Verfügung stellt. Selbstverständlich könnte die Wärmezufuhreinrichtung 19 hierzu auch anders ausgeführt sein.

Beim Durchtritt des Abgases durch das Gewebe der Partikelfilter 35 wird der Ruß abgeschieden. Wenn hierbei der unter Bezugnahme auf die Figuren 15 und 16 erwähnte zusätzliche Oxidationskatalysator 15 vorgesehen ist, der im Abgas enthaltenes NO zu NO₂ aufoxidiert, kann dies nach dem CRT-Verfahren zu einem kontinuierlichen, zumindest teilweisem Abbrand des Rußes führen. Der nicht abgebrannte Ruß wird in größeren Abständen durch einen über den katalytischen Brenner 19 ausgelösten Temperaturanstieg gezündet. Das gefilterte Abgas strömt in den Ausströmkanälen 7 über den NOₓ-Speicherkatalysator 33, an dem das restliche NO und NO₂ gebunden wird.

Der NOₓ-Speicherkatalysator 33 wird, wie oben erläutert, in kürzeren periodischen Abständen durch ein in dem katalytischen Brenner 19 durch partielle Oxidation von Kraftstoff erzeugtes Gemisch aus Wasserstoff und Kohlenmonoxid regeneriert. Dabei etwa durchbrechendes Regenerationsgas kann an dem nachfolgenden Oxidationskatalysator 34 mit Sauerstoffspeicherfunktion umgesetzt werden.

In nicht dargestellter Weise kann der Abgasstrom 2 zwischen der Brennkraftmaschine und dem Abgaskonverter 1 gekühlt werden, um eine Überhitzung des Abgaskonverters im Hochlastbetrieb zu vermeiden.

Bei Abgasreinigungsverfahren, die eine periodische Regeneration eines Speichermaterials erfordern, wie zum Beispiel im Falle des NOₓ-Speicherkatalysators 33 oder des Partikelfilters 35, kann der Abgaskonverter 1 aus mehreren parallel durchströmten Einheiten bestehen, wobei jeweils nur eine Einheit bei reduziertem Abgasdurchsatz regeneriert wird. Dadurch kann der Kraftstoffverbrauch deutlich reduziert werden.

In den Abgaskonverter 1 können in nicht dargestellter Weise auch die Funktionen eines Abgasschalldämpfers und gegebenenfalls einer Standheizung integriert sein, sodass mehrere Komponenten in einer Baueinheit zusammengefasst werden können. Zur Aufgabe der Abgasschalldämpfung können zum Beispiel die geschlossenen Einströmkanäle 6 im Parallelkanalpaket 16 unterschiedlich lang ausgeführt sein. Für Heizzwecke kann vorübergehend oder dauernd ein Abgasteilstrom aus dem Umlenkbereich 9 entnommen oder ein Wärmetauscher in der Haube 8 installiert werden. In diesem Fall lässt sich ein Verfahren zur kombinierten Abgasreinigung bei einem Kraftfahrzeug, zur Abgasschalldämpfung und/oder zur Bereitstellung von Wärme für die Fahrzeuginnenraumheizung durchführen, bei dem alle für die Abgasreinigung, die Abgasschalldämpfung und/oder die Wärmeauskopplung benötigten Elemente in einem Gerät zusammengefasst sind, wobei die Schalldämpfung durch unterschiedlich lange Ein- und Ausströmkanäle 6,7 und/oder schalldämpfende Einbauten im Einlassbereich 3, im Auslassbereich 4 und/oder im Umlenkbereich 9 der Haube 8 verstärkt wird und die Auskopplung der Wärme für eine Innenraumheizung dadurch erfolgt, dass das Abgas im Umlenkbereich 9 sowie das heiße Gas einer Wärmezufuhreinrichtung 19 ganz oder teilweise über einen dafür geeigneten, nicht dargestellten Wärmetauscher geleitet wird.

Es wird deutlich, dass die Katalysatoren 15, der NOₓ-Speicherkatalysator 33, der Oxidationskatalysator 34 sowie der Partikelfilter 35 jeweilige Reinigungskomponenten des Abgaskonverters 1 darstellen, die in Abhängigkeit der in dem Abgasstrom 2 auftretenden Schadstoffe zum Einsatz kommen. Beim Einsatz der Katalysatoren 15, des NOₓ-Speicherkatalysators 33 und des Oxidationskatalysators 34 wird die notwendige bzw. sinnvolle Reihenfolge der Anordnung in den Einströmkanälen 6 und/oder in den Ausströmkanälen 7 von den zu erwartenden Schadstoffen und der Temperaturverteilung in dem Abgaskonverter 1 bestimmt.

## Patentansprüche

1. Verfahren zur Reinigung von Abgasen mit brennbaren, NOₓ-haltigen und/oder partikel- oder rußförmigen Abgasbestandteilen, insbesondere aus Brennkraftmaschinen, wobei das Abgas in einen Abgaswärmetauscher (12) eingeleitet wird, in dem Abgaswärmetauscher (12) in einem Umlenkbereich (9) umgelenkt wird und in Gegenrichtung zu dem einströmenden Abgas aus dem Abgaswärmetauscher (12) ausströmt, wobei das einströmende Abgas durch das ausströmende Abgas erwärmt wird, wobei das Abgas an innerhalb des Abgaswärmetauschers (12) angeordneten Reinigungskomponenten (15,33,34,35) gereinigt wird, wobei dem Abgas in dem Umlenkbereich (9) mittels einer Wärmezufuhreinrichtung (19) Wärme zugeführt wird, und wobei die Temperatur in dem Umlenkbereich (9) in Abhängigkeit der Betriebsbedingungen der Brennkraftmaschine derart geregelt wird, dass eine optimale Schadstoffumwandlung und Regeneration der Reinigungskomponenten (15,33,34,35) gewährleistet wird.

2. Verfahren nach Anspruch 1, **dadurch gekennzeichnet, dass** die Zufuhr von Wärme in dem Umlenkbereich (9) durch thermische oder katalytische, vollständige oder teilweise Verbrennung von Kraftstoff erfolgt, wobei das dabei gebildete Brenngas dem Abgas im Umlenkbereich (9) zugemischt wird.

3. Verfahren nach Anspruch 1 oder 2, **dadurch gekennzeichnet, dass** zur Entstickung von Sauerstoff- und NOₓ-haltigen Abgasen oder zur Regeneration eines NOₓ-bindenden oder NOₓ-umwandelnden Katalysators (33) eine reduzierende Atmosphäre im Abgas durch motorische Maßnahmen, durch Eindüsen von Reduktionsmittel oder dadurch eingestellt wird, dass die Kraftstoffverbrennung in der Wärmezufuhreinrichtung (19) als partielle Oxidation mit Sauerstoffunterschuss erfolgt, wobei bei der Reduktion nicht umgesetztes Reduktionsmittel an einem hinter dem NOₓ-Katalysator angeordneten Oxidationskatalysator mit Sauerstoffspeicherfunktion umgesetzt werden kann.

4. Verfahren zur Abscheidung und Umwandlung von brennbaren Partikeln aus Abgasströmen, insbesondere aus Dieselabgas, **dadurch gekennzeichnet, dass** das Abgas in einer Richtung in einen Partikelfilter (35) einströmt, dass die Partikel beim Durchtritt durch den Partikelfilter (35) abgeschieden oder im Vergleich zum Gasstrom stark verzögert werden, und dass das Abgas im Gegenstrom oder Kreuz-Gegenstrom zum Eintritt den Partikelfilter (35) verlässt, wobei ein Abbrennen der auf dem Partikelfilter (35) abgeschiedenen Partikel dadurch bewirkt wird, dass die Temperatur des Partikelfilters (35) periodisch oder auf Dauer auf eine Temperatur oberhalb der Zündtemperatur der abgeschiedenen oder verzögerten Partikel angehoben wird, wobei die Aufheizung elektrisch oder durch einen Heißgasstrom erfolgt, der in dem Partikelfilter (35) dem Abgas nach Abscheiden der Partikel zugemischt wird.

5. Verfahren nach einem der Ansprüche 2, 3 oder 4, **dadurch gekennzeichnet, dass** die Wärmezufuhr durch Heißgaserzeugung in einem elektrisch zündbaren katalytischen oder thermischen Kraftstoffbrenner (19) stattfindet und die Zündung des Brenners (19) sowie die Steuerung der Wärmeleistung und die Einstellung einer reduzierenden oder oxidierenden Brenngaszusammensetzung durch eine Regel- und Steuereinrichtung derart erfolgt, dass die Steuerung für ein schnelles Aufheizen des Abgaskonverters (1) auf die zweckmäßige Umwandlungstemperatur der Schadstoffe bei Kaltstart sorgt, diese Temperatur an unterschiedliche Betriebszustände anpasst und dabei insbesondere die für einen periodischen Beladungsabbrand von Partikelfiltern (35) und die für eine Schwefelregeneration von NOₓ-Speicherkatalysatoren (33) notwendige Temperaturanhebung vornehmen kann, sowie die Brennerabgaszusammensetzung an die für die NOₓ-Umwandlung erforderlichen Bedingungen anpasst.

6. Verfahren zur Reinigung von Abgasen mit brennbaren, NOₓ-haltigen und partikel- oder rußförmigen Abgasbestandteilen, vorzugsweise von Dieselmotorenabgas, nach einem der Ansprüche 1 bis 5, **dadurch gekennzeichnet, dass** das Abgas nach Aufheizung im Abgaswärmetauscher (12) in einem Partikelfilter (35) von Partikeln gereinigt wird, danach mit Gas aus einem Kraftstoffbrenner (19) vermischt wird und über einen NOₓ-Umwandlungs- und/oder - speicherkatalysator (33) geleitet wird und dann den Abgaskonverter (1) durch den Abgaswärmetauscher (12) im Gegenstrom zum Zulauf (6) verlässt, wobei der Partikelfilter (35) durch periodische Anhebung der Filtertemperatur und der NOₓ-Umwandlungs- und/oder -speicherkatalysator (33) durch periodische Erzeugung von reduzierendem Abgas im Kraftstoffbrenner (19) regeneriert wird und das zu behandelnden Abgas für eine Voroxidation nach Aufheizung im Abgaswärmetauscher (12) und/oder für eine Nachoxidation nach Passieren des NOₓ-Umwandlungs- und/oder -speicherkatalysator (33) über Oxidationskatalysatoren (15,34) geführt wird.

7. Verfahren zur Reinigung von Abgasen mit NOₓhaltigen und/oder partikel- bzw. rußförmigen Abgasbestandteilen nach einem der Ansprüche 1 bis 6, vorzugsweise zur Reinigung des Abgases aus mager betriebenen Brennkraftmaschinen, **dadurch gekennzeichnet, dass** mindestens zwei im wesentlichen baugleiche Abgaskonverter (1) parallel betrieben werden und für den Zeitraum der Regeneration des NOₓ-Umwandlungs- und/oder -speicherkatalysators (33) oder des Partikelfilters (35) der Abgasstrom durch die zu regenerierende Einheit gedrosselt wird, sodass die Regeneration mit einem deutlich reduzierten Zusatzenergie- oder Regenerationsmittelverbrauch durchgeführt werden kann.

8. Verfahren zur kombinierten Abgasreinigung bei einem Kraftfahrzeug, zur Abgasschalldämpfung und/oder zur Bereitstellung von Wärme für die Fahrzeuginnenraumheizung, **dadurch gekennzeichnet, dass** alle für die Abgasreinigung, die Abgasschalldämpfung und/oder die Wärmeauskopplung benötigten Elemente in einem Gerät zusammengefasst sind, wobei die Schalldämpfung durch unterschiedlich lange Ein- und Ausströmkanäle (6,7) und/oder schalldämpfende Einbauten im Einlassbereich (3), im Auslassbereich (4) und/oder im Umlenkbereich (9) einer Haube (8) verstärkt wird und die Auskopplung der Wärme für eine Innenraumheizung dadurch erfolgt, dass das Abgas im Umlenkbereich (9) sowie das heiße Gas einer Wärmezufuhreinrichtung (19) ganz oder teilweise über einen dafür geeigneten Wärmetauscher geleitet wird.

9. Vorrichtung zur Reinigung von Abgasen mit brennbaren, NOₓ-haltigen und/oder partikel- oder rußförmigen Abgasbestandteilen, insbesondere aus Brennkraftmaschinen, mit folgenden Merkmalen:
- einem Abgaswärmetauscher (12), welcher ein Gehäuse (5) und mehrere in dem Gehäuse (5) nebeneinander angeordnete Einströmkanäle (6) und zwischen den Einströmkanälen (6) sich befindliche Ausströmkanäle (7) aufweist, wobei die Einströmkanäle (6) oder die Ausströmkanäle (7) an ihrer Mantelfläche (10,11) allseitig geschlossen sind und zusammen mit dem Gehäuse (5) die dazwischen liegenden Ausströmkanäle (7) oder Einströmkanäle (6) bilden, wobei die Einströmkanäle (6) und die Ausströmkanäle (7) zusammen eine Parallelkanalanordnung (16) bilden, wobei zum Erreichen eines gleich bleibenden Abstands zwischen benachbarten Einströmkanälen (6) oder Ausströmkanälen (7) entweder Distanzelemente (14) in denselben angeordnet sind, oder sich die seitlichen Wandungen (10) der Einströmkanäle (6) aufgrund einer Profilierung gegenseitig abstützen und wobei das Gehäuse (5) am Übergang von den Einströmkanälen (6) in die Ausströmkanäle (7) einen Umlenkbereich (9) bildet,
- einer Wärmezufuhreinrichtung (19), welche in dem Umlenkbereich (9) oder einem Filtervorraum (37) des Abgaswärmetauschers (12) angeordnet ist,
- Reinigungskomponenten (15,33,34,35) für die Umwandlung, die Abscheidung oder die Speicherung der brennbaren, NOₓ-haltigen und/oder partikel- oder rußförmigen Abgasbestandteile, welche innerhalb des Abgaswärmetauschers (12) angeordnet sind,
- einen Einlassbereich (3) und einen Auslassbereich (4), die durch das Gehäuse (5) gebildet sind,
- wobei die Einströmkanäle (6) und/oder die Ausströmkanäle (7) am Einlassbereich (3) gegenüber den jeweils benachbarten Kanälen (7,6) und gegenüber dem Gehäuse (5) durch Schweißung, Lötung und/oder eine Dichtungseinrichtung (17) so abgedichtet sind, dass kein oder nur ein vernachlässigbarer Leckstrom zwischen dem Einlassbereich (3) und dem Auslassbereich (4) auftritt.

10. Vorrichtung nach Anspruch 9, **dadurch gekennzeichnet, dass** der Einlassbereich (3) derart angeordnet ist, dass die Einströmkanäle (6) axial angeströmt werden, und dass der Auslassbereich (4) derart angeordnet ist, dass die Abgase die Ausströmkanäle (7) seitlich verlassen.

11. Vorrichtung nach einem der Ansprüche 9 oder 10, **dadurch gekennzeichnet, dass** die Einströmkanäle (6) durch ein- oder mehrfache, ziehharmonikaartige Faltung eines profilierten oder ebenen Blechbandes hergestellt sind, wobei die Faltung längs oder quer zu einer Hauptströmungsrichtung in den Einströmkanälen (6) erfolgt.

12. Vorrichtung nach einem der Ansprüche 9 bis 11, **dadurch gekennzeichnet, dass** die Dichtungseinrichtung (17) zwischen den Einströmkanälen (6) im Einlassbereich (3) durch Faltung, Zusammenführung von Seitenwänden (10) der Einströmkanäle (6) oder durch Kappen (13) derart abgedeckt ist, dass sie gegen Strömungserosion geschützt ist und dass ein strömungsgünstiger Einlauf entsteht.

13. Vorrichtung zur Reinigung von Abgasen mit brennbaren und /oder NOₓ-haltigen Abgasbestandteilen, vorzugsweise aus mager betriebenen Brennkraftmaschinen nach Anspruch 9 und 10, **dadurch gekennzeichnet, dass** aus einem Monolith bestehend aus dichtem keramischen oder metallischem Material mit rechteckigem Kanalquerschnitt eine Parallelkanalanordnung (16) gebildet ist, wobei jede zweite Kanalreihe als Einströmkanal (6) und jede andere Kanalreihe als Ausströmkanal (7) genutzt wird, wobei die Ausströmkanäle (7) zum Einlassbereich (3) stirnseitig verschlossen und zum Auslassbereich (4) durch durchgehende Schlitze seitlich geöffnet sind, wobei ein Gehäuse (5) mit einer Haube (8) und Öffnungen für das ein- und austretende Abgas den Monolith umgibt, wobei der Einlassbereich (3) gegen den Auslassbereich (4) durch eine Dichtungseinrichtung (17) zwischen Monolith und Gehäuse (8) abgedichtet ist und die Anordnung der für die Umwandlung erforderlichen Reinigungskomponenten (15,33,34,35) durch Beschichtung der Kanalwände erfolgt.

14. Vorrichtung zur Reinigung von Abgasen mit brennbaren partikelförmigen und ggf. NOₓ-haltigen Abgasbestandteilen, vorzugsweise aus Dieselmotoren, nach Anspruch 13, **dadurch gekennzeichnet, dass** der für die Parallelkanalanordnung (16) eingesetzte Monolith über der ganzen Länge oder zumindest im Umlenkbereich (9) aus einer porösen Filterkeramik oder einem porösen, für die Partikelfilterung geeigneten Metall hergestellt ist, wobei dessen Einström- und/oder Ausströmkanäle, beginnend am Einlassbereich (3) über die Länge der Wärmetauschund Katalysatorbereiche (41,42) mit einer Glasur oder einer zumindest weitgehend gasdichten Beschichtung versehen sein können, wobei die Einströmkanäle (6) an ihrer zur Haube (8) gerichteten Stirnfläche verschlossen sind, sodass das Abgas im porösen, gasdurchlässigen Bereich des Monoliths von den Einströmkanälen (6) in die Ausströmkanäle (7) übertritt und dabei gefiltert wird, und wobei der Abbrand der auf dem Filter abgeschiedenen Partikel durch eine im Bereich der Haube (8) in das Filter integrierte elektrische Heizung oder durch das in die Haube (8) zugeführte heiße Brenngas aus einen thermischen oder katalytischen Brenner (19) initiiert wird.

15. Wärmezufuhrvorrichtung zur Anwendung in einem Verfahren nach Anspruch 1 bis 7 oder für eine Vorrichtung nach einem der Ansprüche 8 bis 14, welche als katalytischer Brenner (19) ausgeführt ist, wobei der katalytische Brenner (19) einen zumindest teilweise elektrisch beheizbaren Katalysator (31,32) aufweist, der mit einem Gemisch aus einem sauerstoffhaltigen Gas, Kraftstoff und/oder Wasser beaufschlagt wird, wobei der Sauerstoffgehalt des zugeführten Gemischs sowie die Wasserdosierung durch eine Regel- und Steuereinheit so veränderbar ist, dass der Kraftstoff entweder vollständig verbrannt wird oder zumindest teilweise in CO und H₂ umgewandelt wird, und wobei der katalytische Brenner (19) derart mit einer Haube (8) des Gehäuses (5) verbunden ist, dass das Brenngas in den Umlenkbereich (9) zugeführt und auf die Einströmkanäle (6) und die Ausströmkanäle (7) gleichmäßig verteilt wird.

16. Vorrichtung zur Abscheidung und Umwandlung von brennbaren Partikeln aus Abgasströmen, insbesondere von Dieselruß, mit folgenden Merkmalen:
- einem Einströmbereich (3), in dem das Abgas auf mehrere parallele Einströmkanäle (6) aufgeteilt wird,
- einem Filterbereich, in dem das Abgas über aus Filtermaterial bestehende oder mit Filtermaterial belegte Öffnungen in den Seitenwänden (10) der Einströmkanäle oder am Ende der Einströmkanäle (6) in die Ausströmkanäle (7) übertritt und dabei die Partikel in dem Partikelfilter (35) verzögert oder abscheidet, wobei das Abgas im Gegenstrom oder Kreuzgegenstrom zur Einströmung und getrennt von dieser den Filterbereich durch die Ausströmkanäle (7) verlässt,
- ein den Filterbereich und die Ein- und Ausströmkanäle (6,7) umschließendes Gehäuse (5), das im Anschluss an den Filterbereich eine geschlossene Haube (8) bildet und mit einem Einlassbereich (3) für die Einströmkanäle (6) und einem davon getrennten Auslassbereich (4) für die Ausströmkanäle (7) versehen ist,
- und mit einer Wärmezufuhreinrichtung (19), welche den Filterbereich entweder elektrisch aufheizen kann und/oder einen heißen Gasstrom bereitstellt, der der Haube (8) zugeführt und gleichmäßig auf die Ausströmkanäle (7) verteilt werden kann, wobei die gleichmäßige Verteilung durch Einbauten wie Gitter, Lochbleche oder eine zweckmäßige Strömungsführung sichergestellt wird.
